# EUROPEAN PATENT APPLICATION

(11) **EP 1 386 770 A1**
(43) Date of publication of application: **04.02.2004**
(21) Application number: 02017354.8
(22) Date of filing: 02.08.2002
(51) Int. Cl.: B60K 5/12, B60K 28/00, B62K 5/00

(54) **Motorized beach vehicle**

(71) Applicant: JENN JIANGQ LTD., Tai Ping City, Taichung Hsien, Taiwan (TW)
(72) Inventor: Tai-Yang, Luh, c/oJENN JIANQ LTD., Tai Ping City, Taichung Hsien (TW)
(74) Representative: Reichel, Wolfgang, Dipl.-Ing.

(57) **Abstract**

A motorized beach vehicle includes a shock absorbing device (1; 2; 3), a transmission device, a gear shift device (6), a steering device (8), and a safety remote control and emergency safety switch power shutoff device. Primarily, the shock absorbing device includes a fixing seat containing an elastic body for mounting a motor, a movable seat containing an elastic body for mounting a wheel axle of a wheel, and multiple bushings each containing an elastic body for mounting a main frame and a secondary frame.

## Description

The present invention relates to a motorized beach vehicle, and more particularly to a motorized beach vehicle including a shock absorbing device, a transmission device, a gear shift device, a steering device, and a safety remote control and emergency safety switch power shutoff device.

A conventional motorized beach vehicle in accordance with the prior art uses a CVT gear shift to transmit the power of the engine into the gearbox, and usually includes a forward gear only, without a force increase gear, so that when the motorized beach vehicle is trapped in a muddy situation, it cannot move forward easily. In addition, the distance calculator used for the odometer is mounted outside of the gearbox of the conventional beach cycle, so that the distance calculator is easily worn out. Further, when the conventional motorized beach vehicle is driven on the beach having a rugged or corrugated configuration, the driver cannot control the vehicle easily and stably, and the driver probably falls out of the vehicle due to vibration or oscillation. The conventional motorized beach vehicle is not provided with a safety switch or an emergency shutoff device to stop operation and movement of the vehicle, so that the vehicle will still travel forward successively in such an emergency situation, thereby easily injuring the driver.

The present invention has arisen to mitigate and/or obviate the disadvantages of the conventional motorized beach vehicle.

The primary objective of the present invention is to provide a motorized beach vehicle including a shock absorbing device, a transmission device, a gear shift device, a steering device, and a safety remote control and emergency safety switch power shutoff device.

In accordance with the present invention, there is provided a motorized beach vehicle, comprising a shock absorbing device, a transmission device, a gear shift device, a steering device, and a safety remote control and emergency safety switch power shutoff device, wherein:
the shock absorbing device includes a fixing seat containing an elastic body for mounting a motor, a movable seat containing an elastic body for mounting a wheel axle of a wheel, and multiple bushings each containing an elastic body for mounting a main frame and a secondary frame.

Preferably, the transmission device includes a differential mounted between a drive member and a driven member, the differential includes at least one single direction thrust bearing and at least one clutch, and the transmission device further includes an automatic tension adjusting device including at least one elastic member and at least one idler for adjusting the tension of a power transmission member.

Preferably, the gear shift device includes a gearbox having a propeller shaft provided with a gear having smaller teeth, and a gear shift shaft provided with a gear having larger teeth, thereby forming a force increase gear with a low rotational speed and a large torsion, and the propeller shaft is provided with a drive gear which is mounted in the gearbox, and is connected to a distance calculator.

Preferably, the steering device includes two control bars each mounted on each of the two frames of a driver seat, the two control bars may drive a swing arm which may drive at least one linking member which may drive at least one control plate to control a wheel to turn around, and the swing is pivotally mounted on a vehicle body, so that the wheels at two sides of the vehicle body may be turned around simultaneously, and may have an equal steering angle.

Preferably, the safety remote control and emergency safety switch power shutoff device includes a capacitor discharge ignition unit provided with a relay, and the relay may receive a switch signal of a wireless transmission device (a remote controller) or a wire transmission device (a safety switch), so as to shut the power supply of an alternating current magneto generator assembly, thereby stopping operation of the engine during emergency.

Preferably, the driven member of the transmission device includes a wheel axle, a gear, and a propeller shaft.

Preferably, the power transmission member of the transmission device includes a chain and a belt.

Further benefits and advantages of the present invention will become apparent after a careful reading of the detailed description with appropriate reference to the accompanying drawings.

In the drawings:
Fig. 1 is an exploded perspective view of a motorized beach vehicle in accordance with a preferred embodiment of the present invention;
Fig. 2 is a front plan cross-sectional assembly view of the motorized beach vehicle as shown in Fig. 1;
Fig. 3 is a side plan cross-sectional assembly view of the motorized beach vehicle as shown in Fig. 1;
Fig. 3A is an operational view of the motorized beach vehicle as shown in Fig. 3;
Fig. 4 is a top plan view of the motorized beach vehicle in accordance with a preferred embodiment of the present invention;
Fig. 5 is a partially cut-away perspective view of the motorized beach vehicle in accordance with a preferred embodiment of the present invention;
Fig. 5A is a partially enlarged view of the motorized beach vehicle as shown in Fig. 5;
Fig. 6 is a partially cut-away perspective view of the motorized beach vehicle in accordance with a preferred embodiment of the present invention;
Fig. 7 is a front plan cross-sectional view of the motorized beach vehicle as shown in Fig. 5;
Fig. 8 is a front plan cross-sectional view of the motorized beach vehicle as shown in Fig. 6;
Fig. 9 is an exploded perspective view of the motorized beach vehicle in accordance with a preferred embodiment of the present invention;
Fig. 10 is a plan assembly view of the motorized beach vehicle as shown in Fig. 9;
Fig. 10A is a partially enlarged view of the motorized beach vehicle as shown in Fig. 10;
Fig. 11 is a top plan assembly view of the motorized beach vehicle as shown in Fig. 9;
Fig. 12 is a plan assembly view of an operation of the motorized beach vehicle as shown in Fig. 9;
Fig. 13 is an exploded perspective view of the motorized beach vehicle in accordance with a preferred embodiment of the present invention;
Fig. 14 is a front plan assembly view of the motorized beach vehicle as shown in Fig. 13;
Fig. 14A is a partially enlarged view of the motorized beach vehicle as shown in Fig. 14;
Fig. 15 is a side plan cross-sectional assembly view of the motorized beach vehicle as shown in Fig. 13;
Fig. 16 is a schematic operational view of the motorized beach vehicle as shown in Fig. 15;
Fig. 17 is a plan view of the motorized beach vehicle in accordance with another preferred embodiment of the present invention;
Fig. 18 is a plan view of the motorized beach vehicle in accordance with another preferred embodiment of the present invention;
Fig. 19 is an exploded perspective view of the motorized beach vehicle in accordance with a preferred embodiment of the present invention;
Fig. 20 is a side plan cross-sectional assembly view of the motorized beach vehicle as shown in Fig. 19;
Fig. 21 is a plan assembly view of the motorized beach vehicle as shown in Fig. 19;
Fig. 21A is a side plan cross-sectional assembly view of the motorized beach vehicle as shown in Fig. 19;
Fig. 22 is an operational view of the motorized beach vehicle as shown in Fig. 21;
Fig. 22A is an operational view of the motorized beach vehicle as shown in Fig. 21A;
Fig. 23 is an exploded perspective view of the motorized beach vehicle in accordance with a preferred embodiment of the present invention;
Fig. 24 is a top plan cross-sectional assembly view of the motorized beach vehicle as shown in Fig. 23;
Fig. 25 is an exploded perspective view of the motorized beach vehicle in accordance with a preferred embodiment of the present invention;
Fig. 26 is a plan cross-sectional assembly view of the motorized beach vehicle as shown in Fig. 25;
Fig. 27 is an operational view of the motorized beach vehicle as shown in Fig. 23;
Fig. 28 is an operational view of the motorized beach vehicle as shown in Fig. 25;
Fig. 29 is an exploded perspective view of the motorized beach vehicle in accordance with a preferred embodiment of the present invention;
Fig. 30 is a plan cross-sectional assembly view of the motorized beach vehicle as shown in Fig. 29;
Fig. 31 is an operational view of the motorized beach vehicle as shown in Fig. 30;
Fig. 32 is a plan expansion view of a gear shift cam shaft of the motorized beach vehicle in accordance with a preferred embodiment of the present invention;
Fig. 32A is a plan view of the gear shift cam shaft of the motorized beach vehicle in accordance with a preferred embodiment of the present invention;
Fig. 33 is an operational view of the motorized beach vehicle as shown in Fig. 30;
Fig. 34 is a plan cross-sectional assembly view of the motorized beach vehicle as shown in Fig. 29;
Fig. 35 is an exploded perspective view of the motorized beach vehicle in accordance with a preferred embodiment of the present invention;
Fig. 35A is a partially enlarged view of the motorized beach vehicle as shown in Fig. 35;
Fig. 35B is an exploded perspective view of the motorized beach vehicle in accordance with a preferred embodiment of the present invention;
Fig. 36 is a plan assembly view of the motorized beach vehicle as shown in Fig. 35;
Fig. 37 is a cross-sectional view of the motorized beach vehicle as shown in Fig. 36;
Fig. 38 is a perspective view of the motorized beach vehicle in accordance with a preferred embodiment of the present invention;
Fig. 38A is a partially enlarged view of the motorized beach vehicle as shown in Fig. 38;
Fig. 38B is a partially enlarged view of the motorized beach vehicle as shown in Fig. 38;
Fig. 38C is a partially enlarged view of the motorized beach vehicle as shown in Fig. 38;
Fig. 39 is a side plan view of the motorized beach vehicle as shown in Fig. 38;
Fig. 39A is a partially enlarged view of the motorized beach vehicle as shown in Fig. 39;
Fig. 40 is a top plan view of the motorized beach vehicle as shown in Fig. 38;
Fig. 41 is a top plan view of the motorized beach vehicle as shown in Fig. 38;
Fig. 41A is a side plan view of the motorized beach vehicle as shown in Fig. 38;
Fig. 42 is an operational view of the motorized beach vehicle as shown in Fig. 41;
Fig. 42A is an operational view of the motorized beach vehicle as shown in Fig. 41A;
Fig. 43 is a circuit block diagram of a safety remote control and emergency safety switch power shutoff device of the motorized beach vehicle in accordance with a preferred embodiment of the present invention;
Fig. 44 is a circuit layout diagram of the safety remote control and emergency safety switch power shutoff device of the motorized beach vehicle in accordance with the preferred embodiment of the present invention;
Fig. 45 is a circuit layout diagram of a remote control unit of the safety remote control and emergency safety switch power shutoff device of the motorized beach vehicle in accordance with the preferred embodiment of the present invention;
Fig. 46 is a schematic perspective view of the safety remote control and emergency safety switch power shutoff device of the motorized beach vehicle in accordance with the preferred embodiment of the present invention;
Fig. 47 is a flow chart of operating the safety remote control and emergency safety switch power shutoff device of the motorized beach vehicle in accordance with the preferred embodiment of the present invention;
Fig. 48 is a flow chart of stopping operation of the safety remote control and emergency safety switch power shutoff device of the motorized beach vehicle in accordance with the preferred embodiment of the present invention;
Fig. 49 is a schematic exploded perspective view of the safety switch of the safety remote control and emergency safety switch power shutoff device of the motorized beach vehicle in accordance with the preferred embodiment of the present invention;
Fig. 49A is a perspective view of an elastic sleeve of the safety switch of the safety remote control and emergency safety switch power shutoff device of the motorized beach vehicle in accordance with the preferred embodiment of the present invention;
Fig. 50 is a top plan schematic operational view of the safety remote control and emergency safety switch power shutoff device of the motorized beach vehicle in accordance with the preferred embodiment of the present invention;
Fig. 51 is a side plan cross-sectional assembly view of the safety remote control and emergency safety switch power shutoff device of the motorized beach vehicle in accordance with the preferred embodiment of the present invention; and
Fig. 52 is an operational view of the safety remote control and emergency safety switch power shutoff device of a motorized beach vehicle as shown in Fig. 51.

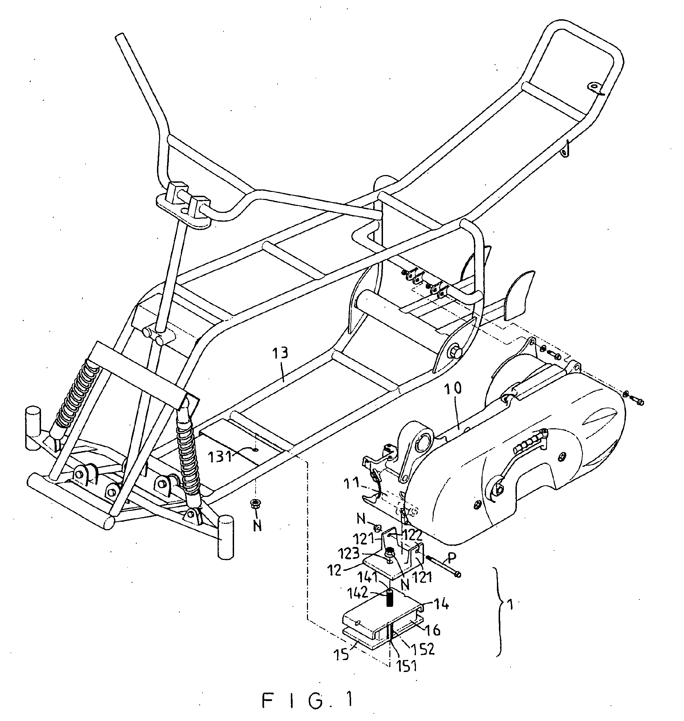

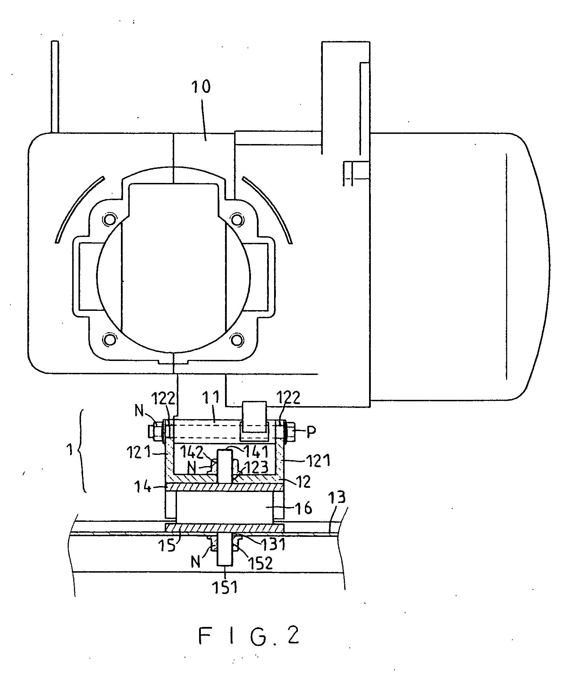

Referring to the drawings and initially to Figs. 1 and 2, a motorized beach vehicle in accordance with a preferred embodiment of the present invention comprises a shock absorbing device that may be used in a motor and wheels.

As shown in Figs. 1 and 2, the motor 10 has a bottom provided with a transverse post 11 for pivotally mounting a fixing bracket 12 by a bolt "P" and a nut "N". The fixing bracket 12 has two side walls 121 respectively mounted on the two ends of the transverse post 11 of the motor 10 and each formed with a through hole 122 for passage of the bolt "P". The fixing bracket 12 is formed with a through hole 123, and the frame 13 is formed with a through hole 131 for mounting the shock absorbing device 1. The shock absorbing device 1 includes an upper fixing seat 14, a lower fixing seat 15, and an elastic body 16 mounted between the upper fixing seat 14 and the lower fixing seat 15. The upper fixing seat 14 is provided with a fixing rod 141 which is extended upward and formed with an outer thread 142. The fixing rod 141 of the upper fixing seat 14 is passed through the through hole 123 of the fixing bracket 12, and a nut "N" is screwed on the outer thread 142 of the fixing rod 141 of the upper fixing seat 14. The lower fixing seat 15 is provided with a fixing rod 151 which is extended downward and formed with an outer thread 152. The fixing rod 151 of the lower fixing seat 15 is passed through the through hole 131 of the frame 13, and a nut "N" is screwed on the outer thread 152 of the fixing rod 151 of the lower fixing seat 15.

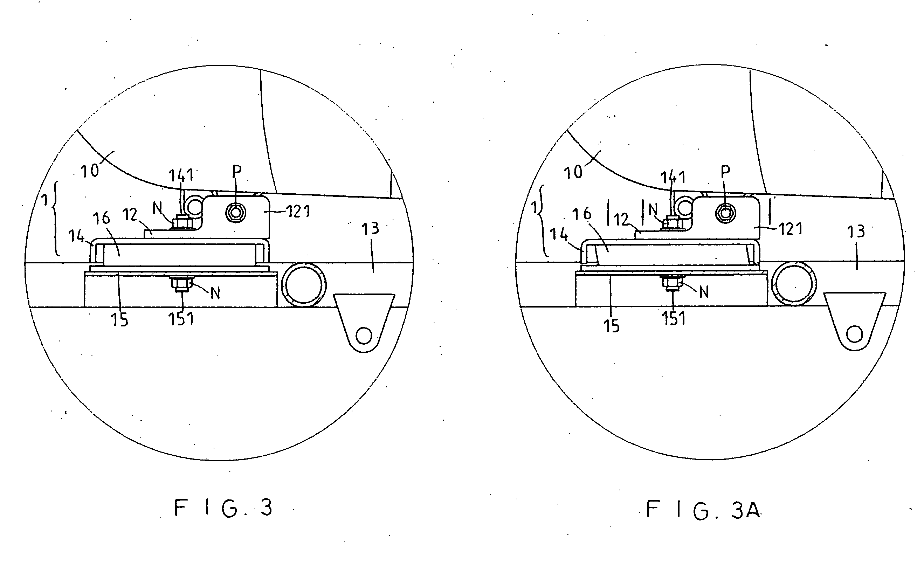

In application, as shown in Figs. 3 and 3A, the vibration of the motor 10 may be evenly distributed to the shock absorbing device 1 through the fixing bracket 12, and is absorbed by the elastic body 16, thereby reducing the vibration of the motor 10.

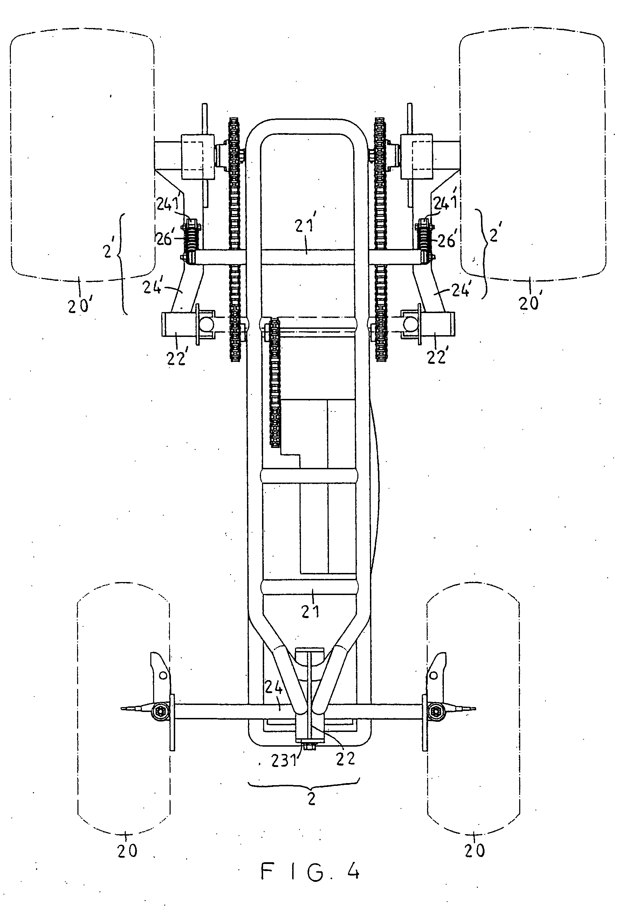

As shown in Fig. 4, a shock absorbing device 2 is mounted between the two front wheels 20, and each of the two rear wheels 20' is provided with an independent shock absorbing device 2'.

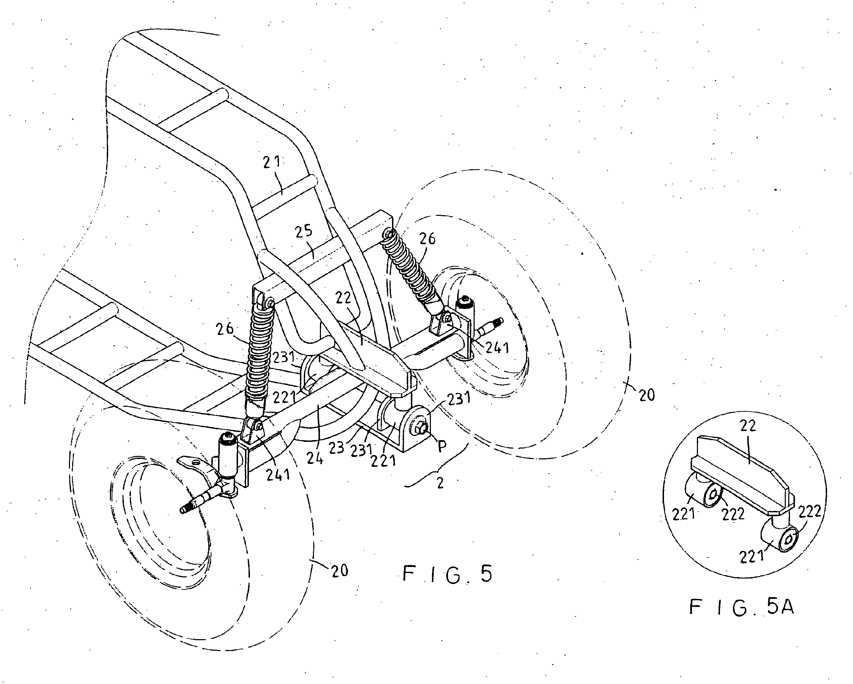

As shown in Figs. 5 and 5A, the front side of the frame 21 is provided with a fixing seat 22 which has a bottom provided with two rotation shafts 221 each provided with a bushing 222 made of a soft material such as rubber, copper or the like for pivotally mounting a movable seat 23 by bolts "P". The movable seat 23 is provided with multiple ear plates 231 mounted on each of the rotation shafts 221 for passage of the bolts "P", so that the movable seat 23 may be axially rotated on the rotation shafts 221. The movable seat 23 is provided with a cantilever 24 whose two ends are transversely extended to the front wheels 20. Each of the two ends of the cantilever 24 is provided with an ear plate 241, so that two shock absorbers 26 may be mounted between the two ear plates 241 of the cantilever 24 and the fixing plate 25 of the frame 21.

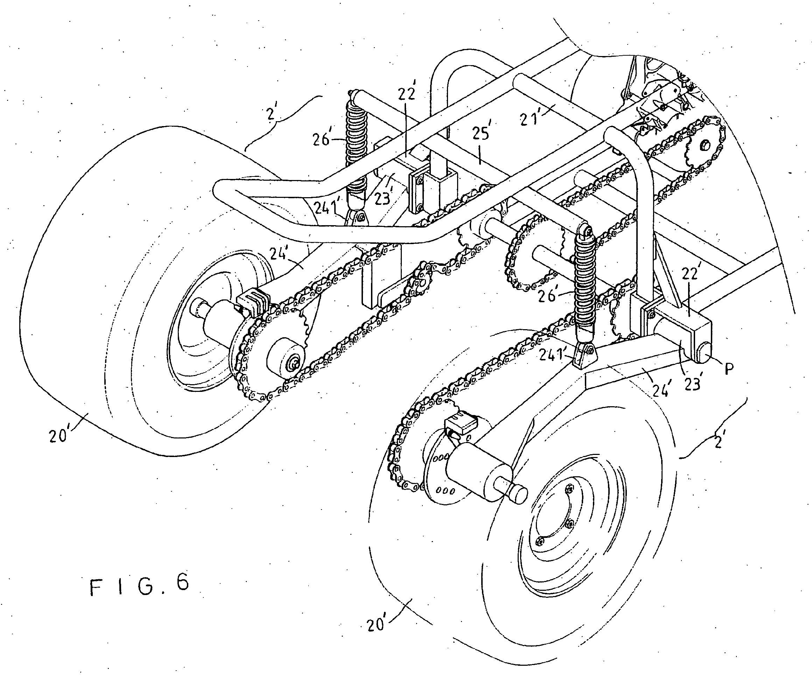

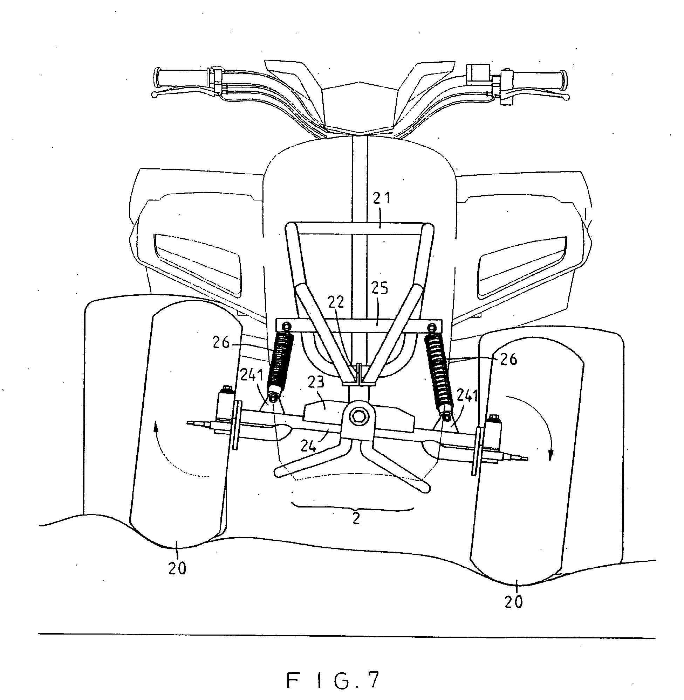

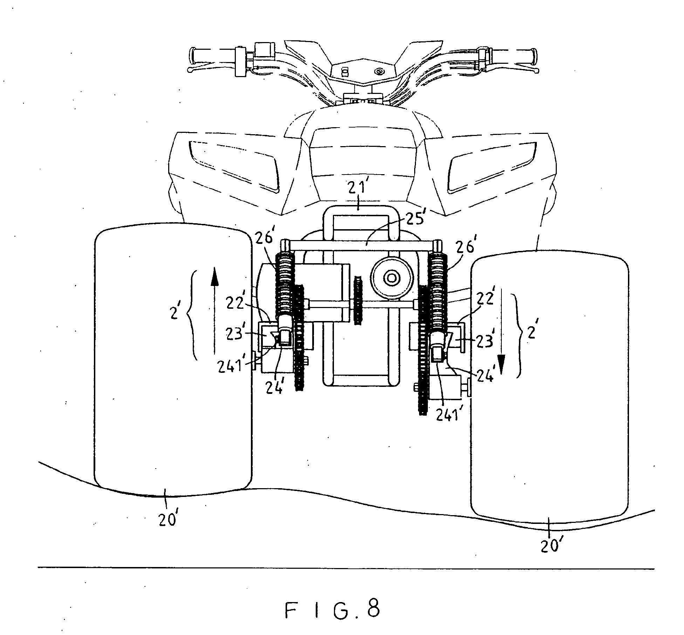

As shown in Fig. 6, the frame 21' has two sides each provided with a fixing seat 22' which is pivotally provided with a movable seat 23' by a bolt "P". The movable seat 23' is provided with a cantilever 24' which has a distal end extended to each of the two rear wheels 20', so that each of the two cantilevers 24' may be pivoted independently. Each of the two cantilevers 24 is provided with an ear plate 241', so that two shock absorbers 26' may be mounted between the ear plates 241' of the two cantilevers 24' and the fixing plate 25' of the frame 21'.

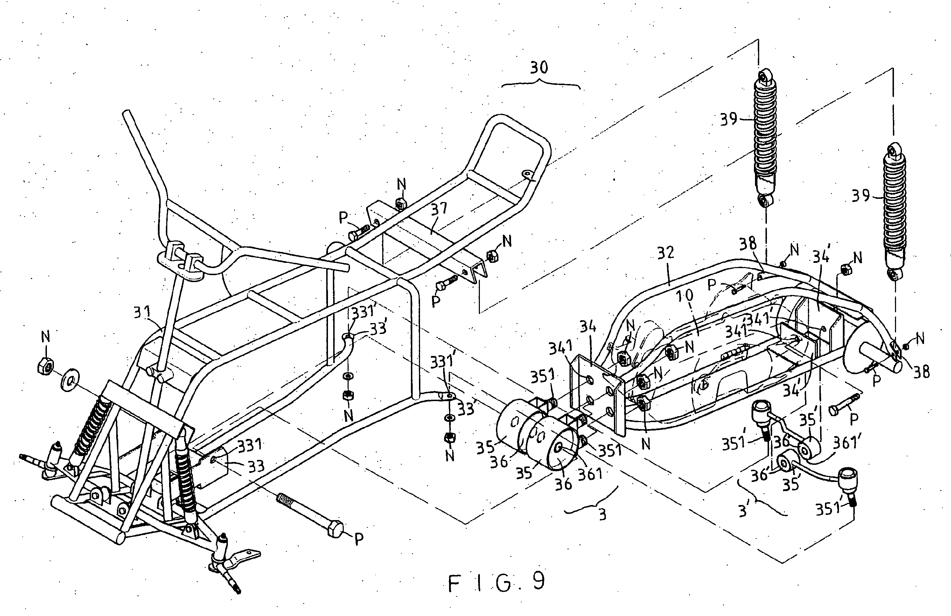

In application, as shown in Figs. 7 and 8, the movable seat 23 of the front wheels 20 and the movable seats 23' of the front wheels 20' may be pivoted freely, thereby reducing the vibration of the frame 21 and 21'.

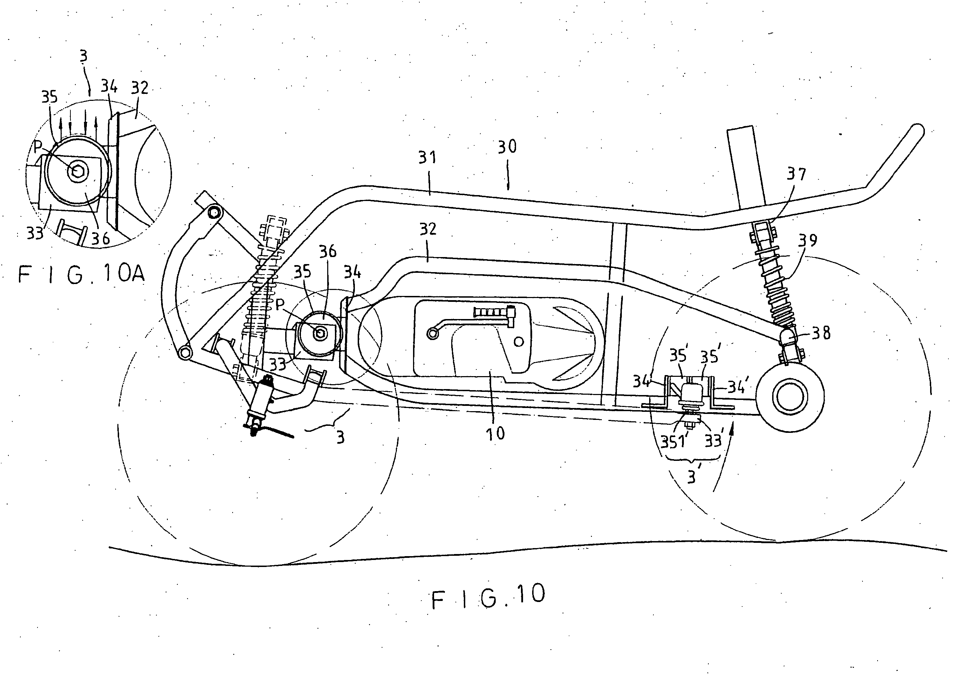

As shown in Figs. 9, 10 and 10A, the main body 30 includes a main frame 31, and a secondary frame 32 mounted in the main frame 31. The motor 10 and the rear wheel axle are mounted in the secondary frame 32.

The main frame 31 has a front side provided with a fixing bracket 33, and a rear side provided with two fixing brackets 33', and the secondary frame 32 has a front side provided with a fixing plate 34, and a rear side provided with two fixing plates 34', so that a shock absorbing device 3 may be mounted between the fixing plate 33 of the main frame 31 and the fixing plate 34 of the secondary frame 32, and a shock absorbing device 3' may be mounted between the fixing brackets 33' of the main frame 31 and the fixing brackets 34' of the secondary frame 32.

The shock absorbing device 3 includes two bushings 35 each provided with an elastic body 36 which is made of rubber, thereby forming a high torque resistant member. The elastic body 36 of each of the two bushings 35 is formed with a shaft hole 361, so that the elastic body 36 may be pivotally mounted on a through hole 331 of the fixing plate 33 of the main frame 31 by a bolt "P" and a nut "N". Each of the two bushings 35 is provided with two threaded rods 351 each extended through a through hole 341 formed in the fixing plate 34 of the secondary frame 32, and each screwed into a nut "N", so that each of the two bushings 35 is secured on the fixing plate 34 of the secondary frame 32.

The shock absorbing device 3' includes two bushings 35' each provided with an elastic body 36' which is made of rubber, thereby forming a high torque resistant member. The elastic body 36' of each of the two bushings 35' is formed with a shaft hole 361', so that the elastic body 36' may be pivotally mounted on a through hole 341' of each of the fixing brackets 34' of the secondary frame 32 by a bolt "P" and a nut "N". Each of the two bushings 35' is provided with a threaded rod 351 extended through a through hole 331' formed in each of the fixing brackets 33' of the main frame 31, and screwed into a nut "N", so that each of the two bushings 35' is secured on each of the fixing brackets 33' of the main frame 31.

The main frame 31 has a rear portion provided with a connecting bracket 37, and the secondary frame 32 has a rear portion provided with two connecting brackets 38, so that two shock absorbers 39 may be mounted between the connecting bracket 37 of the main frame 31 and the two connecting brackets 38 of the secondary frame 32 by bolts "P" and nuts "N".

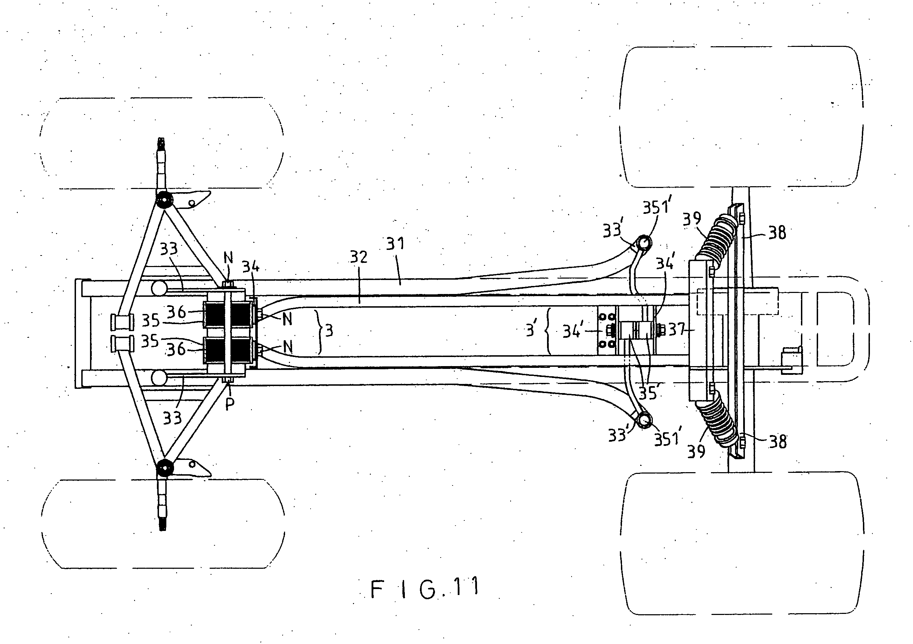

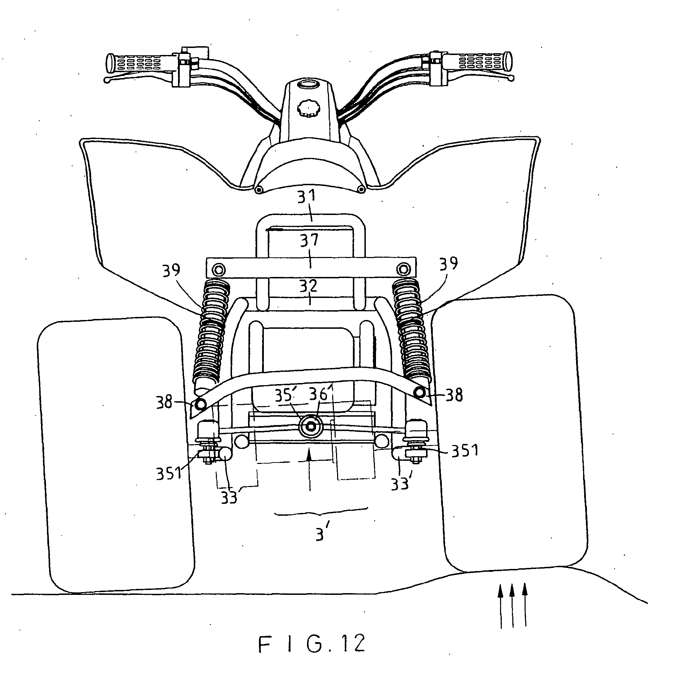

In application, as shown in Figs. 11 and 12, when the motorized beach vehicle is deviated toward one side, the elastic body 36 of the high torque resistant member may be distorted and deformed, so that the secondary frame 32 of the motor 10 will not lose its center of gravity due to deflection of the main frame 31. In addition, the elastic body 36 of the high torque resistant member has a restoring effect.

The motorized beach vehicle further comprises a transmission device including a forward differential, and a rearward differential.

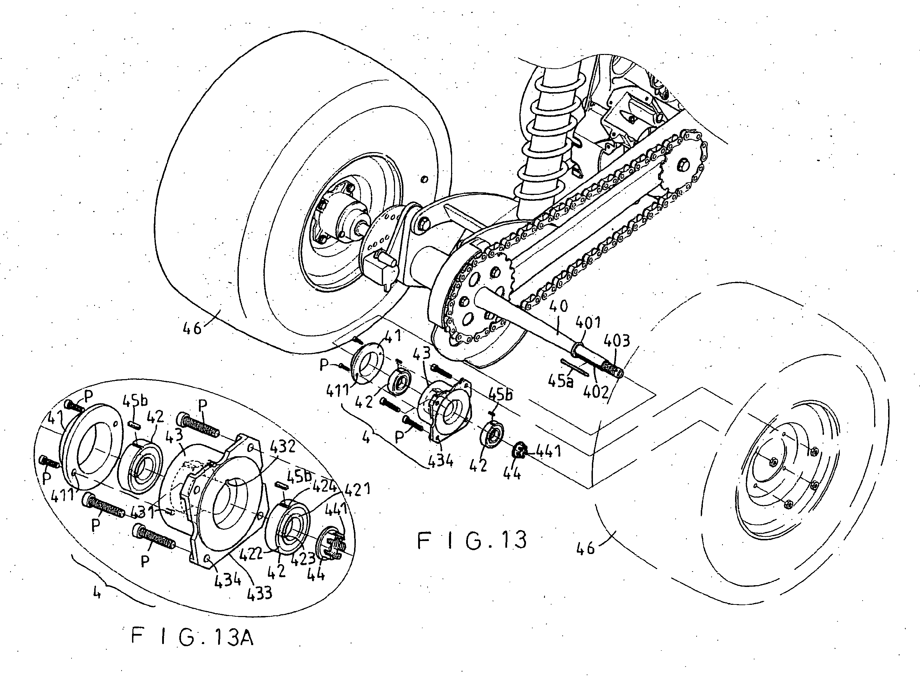

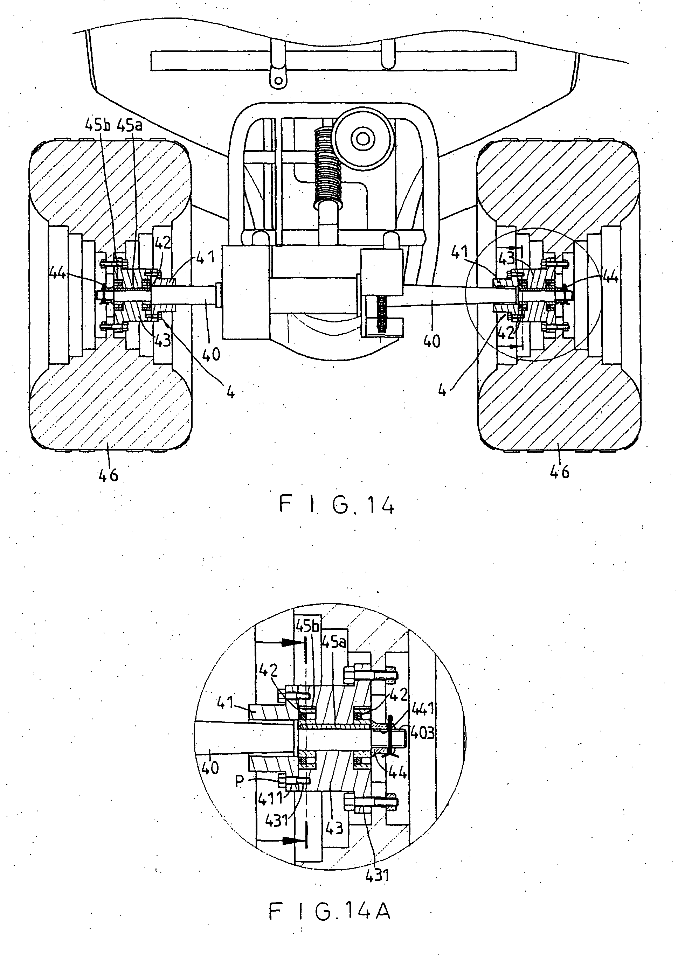

As shown in Figs. 13, 13A and 14, the forward differential of the transmission device of the motorized beach vehicle is shown. The drive member 40 is provided with a catch flange 401, a spline 402, and an outer thread 403, so that a differential 4 may be mounted on the drive member 40. The differential 4 includes a bearing cover 41, two single direction thrust bearings 42, a bearing seat 43, and a fixing member 44. The bearing cover 41 is formed with through holes 411 mating with screw bores 431 formed in the bearing seat 43, so that the bearing cover 41 may be secured on the bearing seat 43 by bolts "P". Each of the single direction thrust bearings 42 is retained on the catch flange 401 of the drive member 40, and is provided with an inner seat 421 formed with a spline 423 for mounting a key 45a which is received in the spline 402 of the drive member 40, and an outer seat 422 formed with a spline 424 for mounting a key 45b which is received in a spline 432 formed in the bearing seat 43. Each of the single direction thrust bearings 422 has a otation direction opposite to that of the driven member 46, so as to produce an idle action at the reverse state, thereby forming a differential effect. The bearing seat 43 has an outer periphery provided with a fixing plate 433 which is formed with multiple through holes 434 for mounting the fixing plate 433 on the driven member 46 by bolts "P" and nuts "N". As shown in the figures, the driven member 46 is a wheel axle. The fixing member 44 has an inner thread 441 screwed on the outer thread 403 of the drive member 40.

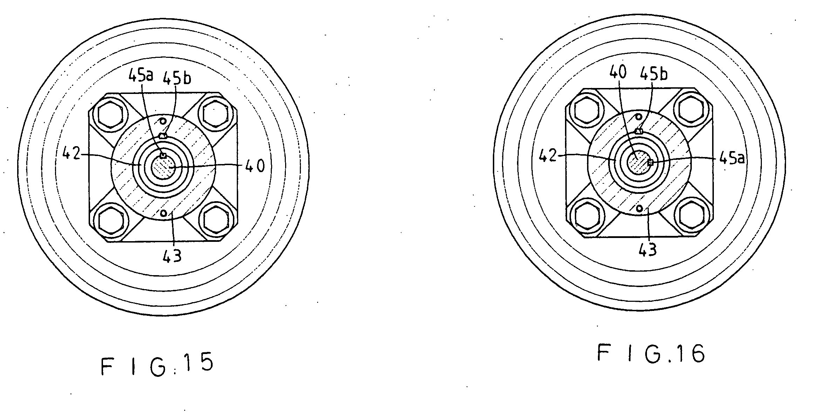

In application, as shown in Figs. 15 and 16, when turning around, the inner tire of the driven member 46 cannot be synchronously rotated with the drive member 40. At this time, each of the single direction thrust bearings 42 produces a reverse state, thereby forming a differential effect, so as to efficiently reduce the turning radius when turning around.

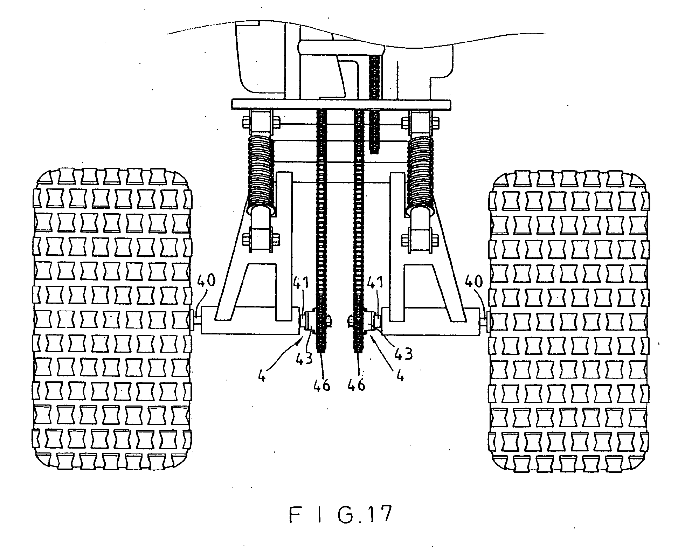

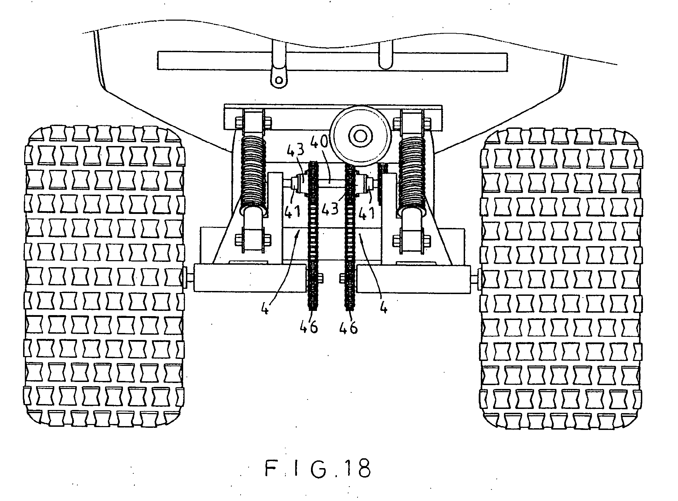

As shown in Figs. 17 and 18, the driven member 46 may be a drive gear, a drive shaft or the like. thus, the differential 4 may be mounted on the drive gear or the drive shaft.

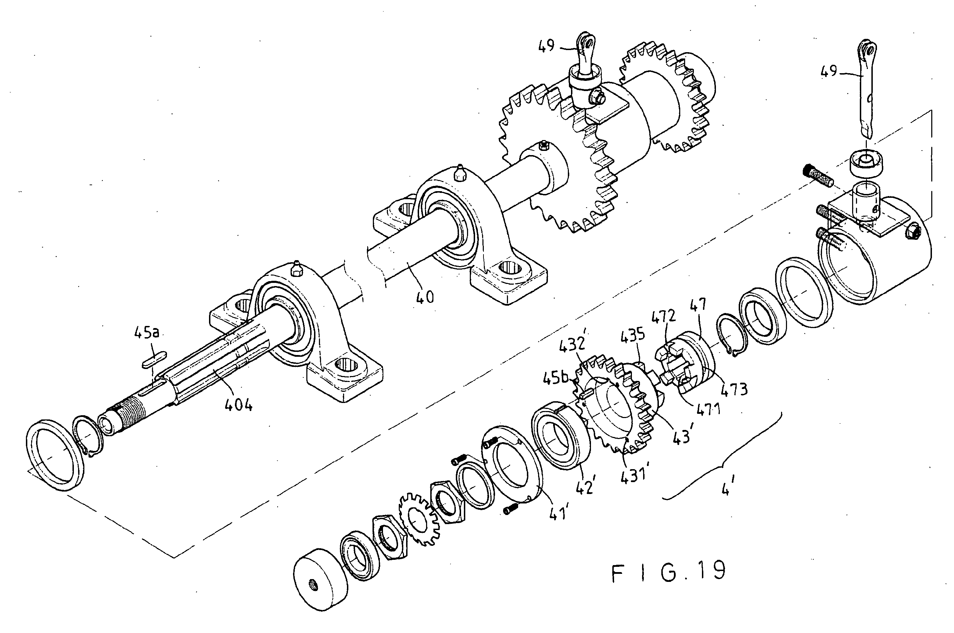

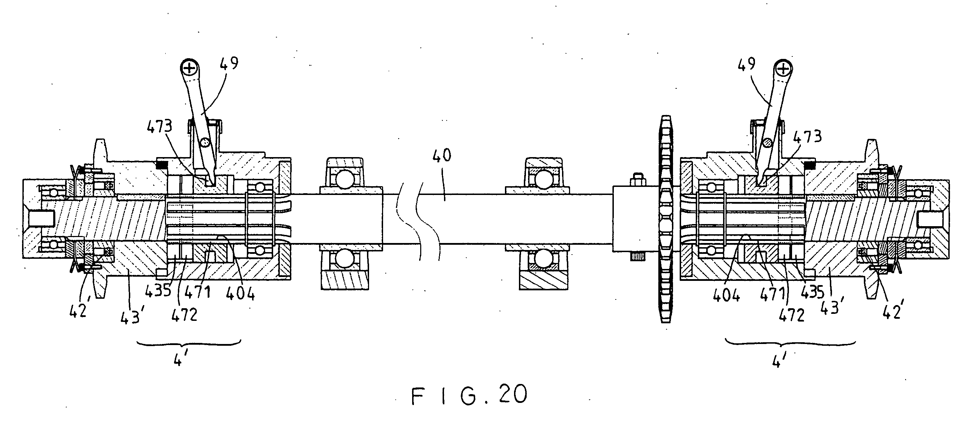

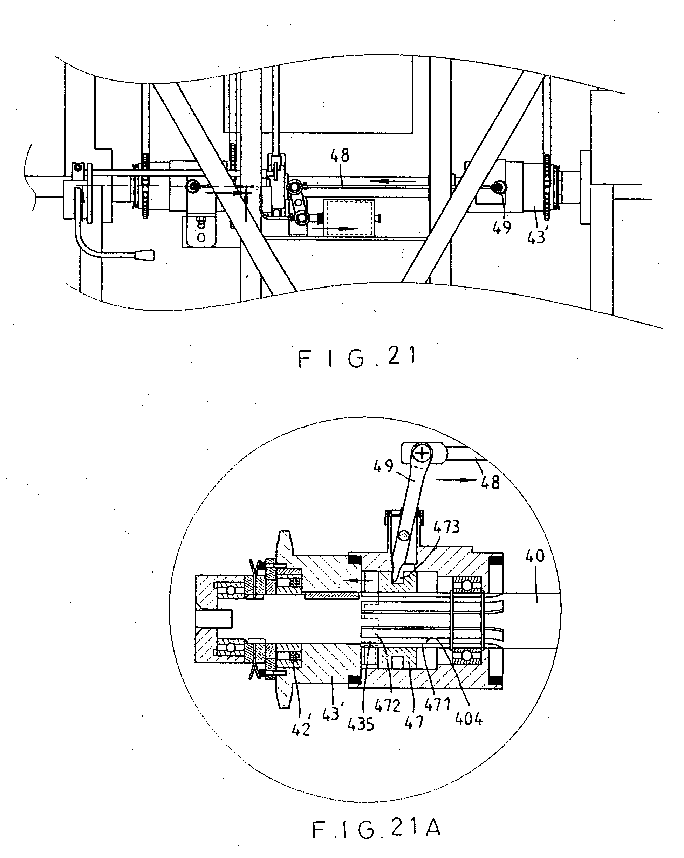

As shown in Figs. 19 and 20, the backward differential of the transmission device of the motorized beach vehicle is shown. The drive member 40 is provided with an outer spline 404. Thus, each of the differentials 4' may be provided with a clutch 47, so that the inner spline 471 may slide in the outer spline 404 of the drive member 40. The single direction thrust bearings 42' is received in the bearing seat 43' which is provided with multiple combination portions 435 of the bearing seat 43'. The clutch 47 is provided with multiple combination portions 472 combined with the multiple combination portions 435. The clutch 47 is formed with an annular groove 473 for pivotally receiving an action member 49 which may be driven to pivot by a linking member 48 (see Fig. 21A).

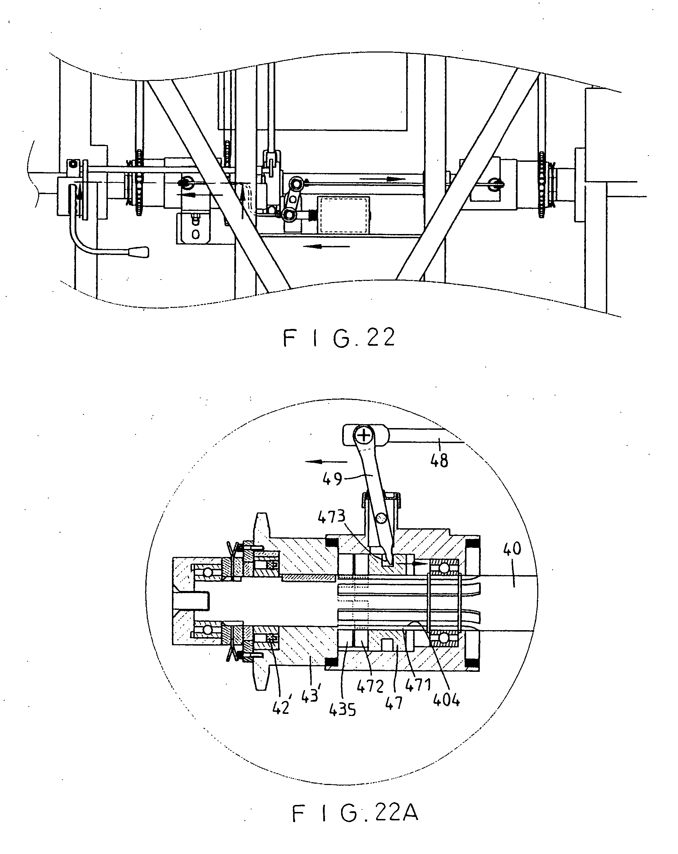

In application, as shown in Figs. 21, 21A, 22 and 22A, the combination portions 472 of the clutch 47 may be combined with the combination portions 435 of the bearing seat 43' by the action member 49, so that when the single direction thrust bearings 42' in the bearing seat 43' is disposed at an idle state, the drive member 40 may be inverted to drive the driven member.

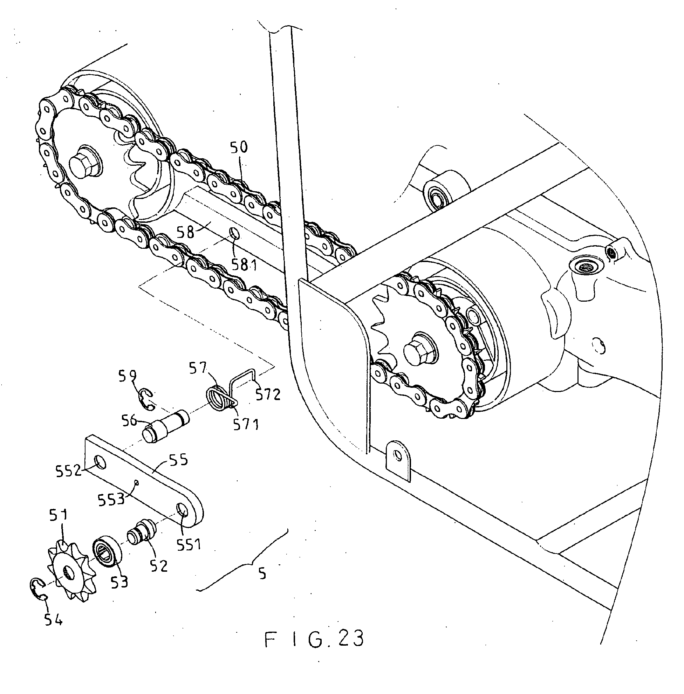

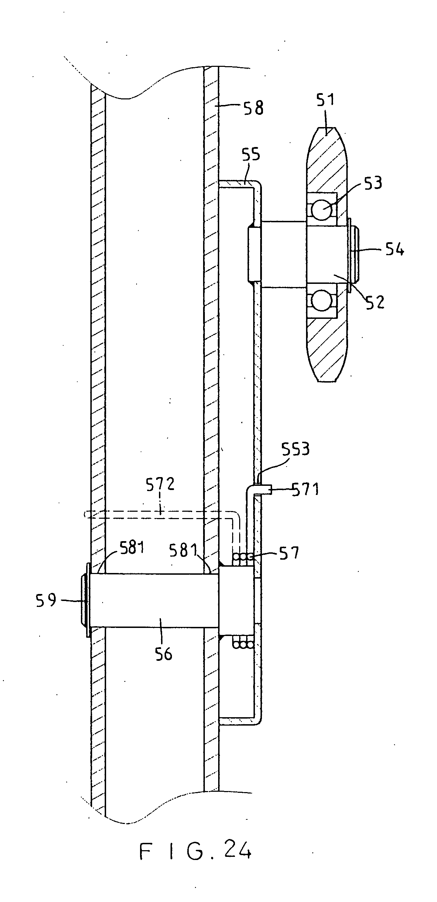

As shown in Figs. 23 and 24, a single direction automatic tension adjusting device 5 is mounted on the chain 50. The swing arm 55 has a first end formed with a through hole 551 and a second end formed with a through hole 552. An idler 51 is pivotally mounted on the through hole 551 of the first end of the swing arm 55 by a pin 52, a bearing 53 and an E-shaped snap ring 54. The through hole 552 of the second end of the swing arm 55 is provided with a shaft 56 which is provided with an elastic member 57. The shaft 56 of the swing arm 55 is extended through a through hole 581 formed in the vehicle body 58, and is secured by an E-shaped snap ring 59, so that the shaft 56 of the swing arm 55 may be fixed on the vehicle body 58 by soldering. The swing arm 55 has a mediate portion formed with a through hole 553 for hooking a first end 571 of the elastic member 57 whose second end 572 is hooked on the vehicle body 58. The swing arm 55 may be pivoted upward by the elastic force of the elastic member 57, so that the idler 51 may mesh with the chain 50, thereby maintaining the tension of the chain 50.

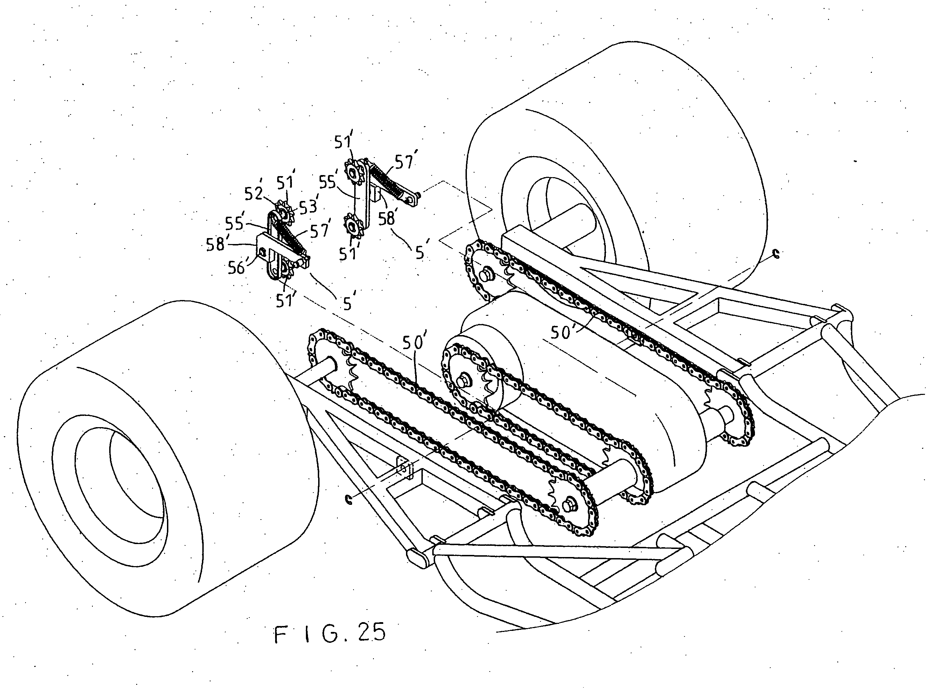

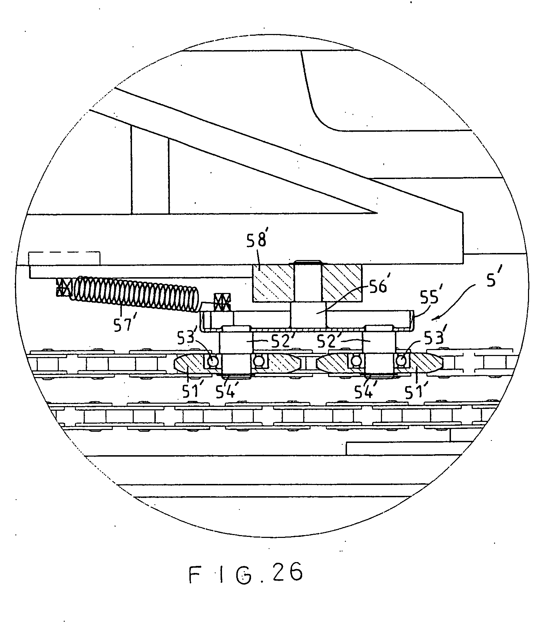

As shown in Figs. 25 and 26, the chain 50' has an upper portion and a lower portion each provided with a two-direction automatic tension adjusting device 5'. The two idlers 51' of the two-direction automatic tension adjusting device 5' may mesh with the upper portion and the lower portion of the chain 50' respectively. Each of the idlers 51' has a -5Xcenter provided with a bearing 53' which has a center provided with a pin 52' which is extended through the top end and the bottom end of the swing arm 55', and is snapped by an E-shaped snap ring 54', so that each of the idlers 51' may be rotated freely. The mediate portion of the swing arm 55' is provided with a shaft 56' which is fixed on the vehicle body 58'. The elastic member 57' is mounted between one end of the swing arm 55' and the vehicle body 58'. Thus, the swing arm 55' may be pivoted about the shaft 56', so that the idler 51' on the top end and the bottom end of the swing arm 55' may mesh with the upper portion and the lower portion of the chain 50' respectively, thereby adjusting the tension of the chain 50' automatically.

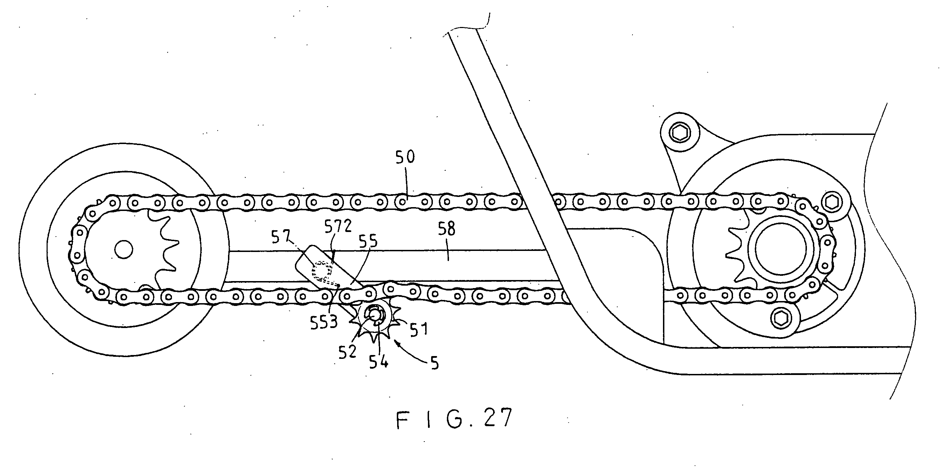

In application, as shown in Fig. 27, when the chain 50 is tensioned, the swing arm 55 together with the idler 51 has a smaller pivot angle, and when the chain 50 is loosened, the swing arm 55 together with the idler 51 has a larger pivot angle, thereby adjusting the tension of the chain 50 automatically.

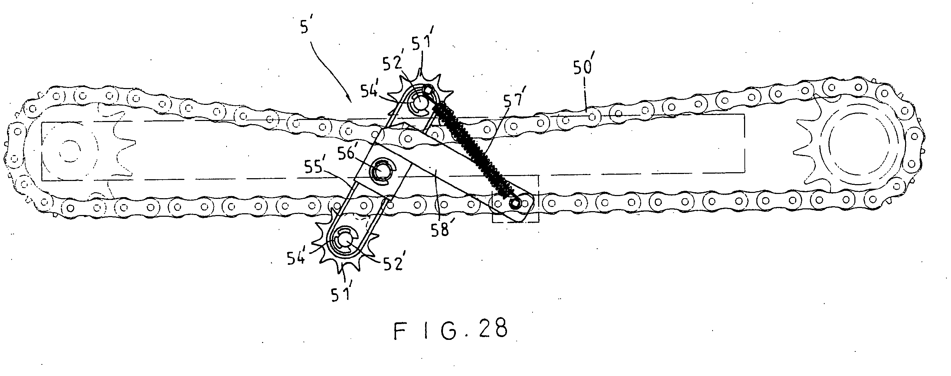

In application, as shown in Fig. 28, when the chain 50' is tensioned, the swing arm 55' together with the idler 51' has a smaller pivot angle, and when the chain 50' is loosened, the swing arm 55' together with the idler 51' has a larger pivot angle, thereby adjusting the tension of the chain 50' automatically.

The motorized beach vehicle further comprises a gear shift device.

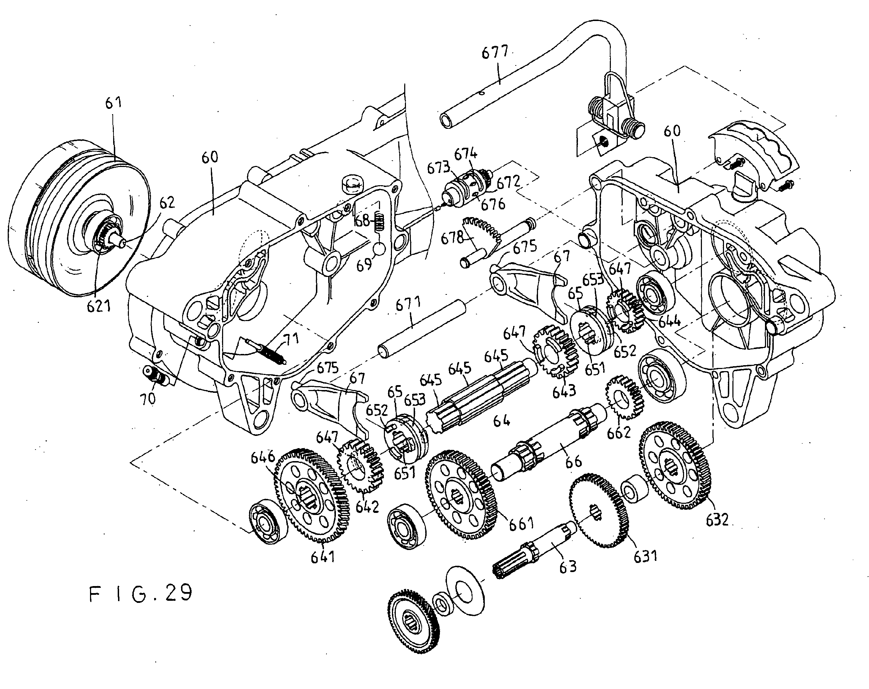

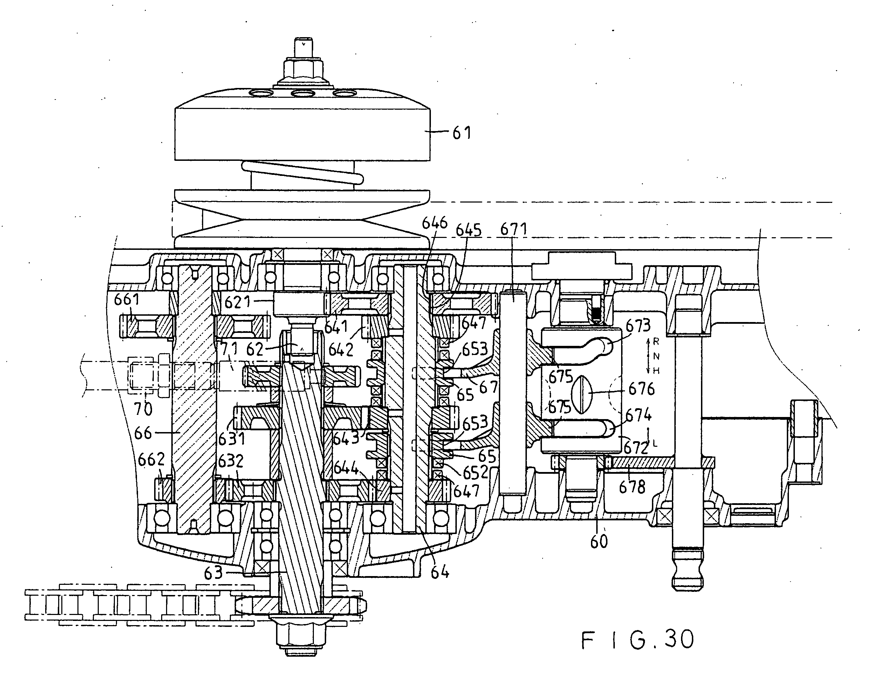

As shown in Figs. 29 and 30, the gearbox 60 of the gear shift device transmits the power of the engine through the CVT gear shift 61 to the power shaft 62 which is combined with the propeller shaft 63, so that the power shaft 62 and the propeller shaft 63 may present a relative movement therebetween. The power shaft 62 includes a drive gear 621 meshing with the reduction gear 641 of a gear shift shaft 64 to drive and rotate the reduction gear 64. The gear shift shaft 64 is serially provided with a backward change gear 642, a forward change gear 643, and a force increase change gear 644. The gear shift shaft 64 has an outer periphery formed with outer splines 645 between the backward change gear 642, the forward change gear 643, and the force increase change gear 644, so that two sets of clutches 65 may be mounted between the backward change gear 642, the forward change gear 643, and the force increase change gear 644. Each of the clutches 65 is formed with inner splines 651, and the reduction gear 64 is formed with inner splines 646. The clutches 65 are provided with locking blocks 652, while the backward change gear 642, the forward change gear 643, and the force increase change gear 644 are also provided with locking blocks 647, so that the clutches 65 may be moved on the outer splines 645 of the gear shift shaft 64 to selectively mesh with and drive one of the backward change gear 642, the forward change gear 643, and the force increase change gear 644, thereby forming four different gear positions including the neutral status, the reverse gear status, the forward gear status, and the force increase gear status. The propeller shaft 63 is provided with a forward drive gear 631 and a force increase drive gear 632 to respectively mesh with the forward change gear 643 and the force increase change gear 644 of the gear shift shaft 64.

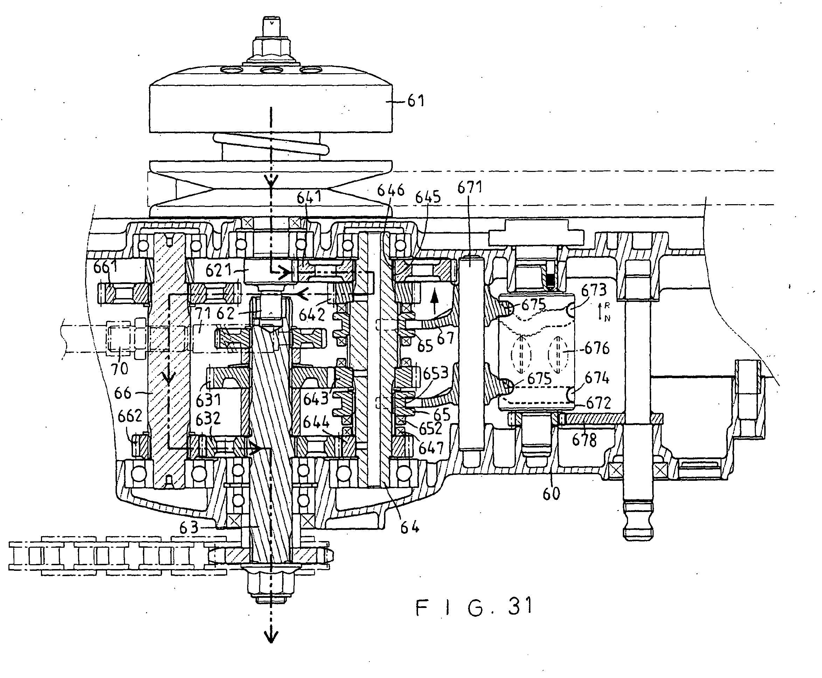

As shown in Fig. 31, the backward change gear 642 and the steering gear 661 of the steering shaft 66 mesh with each other, and another steering gear 662 of the steering shaft 66 and the force increase drive gear 632 mesh with each other. Each clutch 65 has an outer wall formed with an insertion groove 653 for receiving a first end of a gear shift drive fork 67 that is mounted on an axle 671. The second end of each of the two gear shift drive forks 67 is provided with a positioning post 675 which may slide with the track a respective one of two slots 673 and 674 formed in the periphery of a gear shift cam shaft 672.

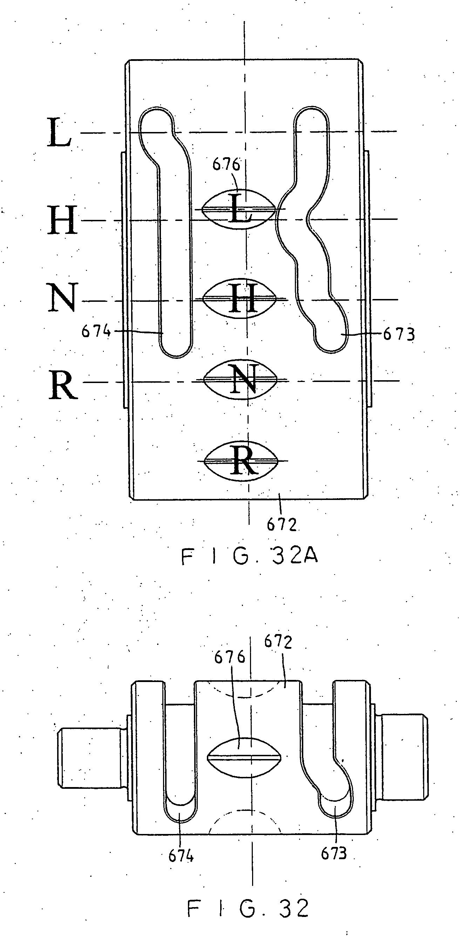

Referring to Figs. 32 and 32A, the slot 673 is formed by a continuous track including a high stage, a middle stage and a low stage, and the slot 674 is formed by a continuous track including a middle stage and a low stage. The slots 673 and 674 respectively indicate different gear positions, including a reverse gear "R", a neutral status "N", a forward gear "H", and a force increase gear "L".

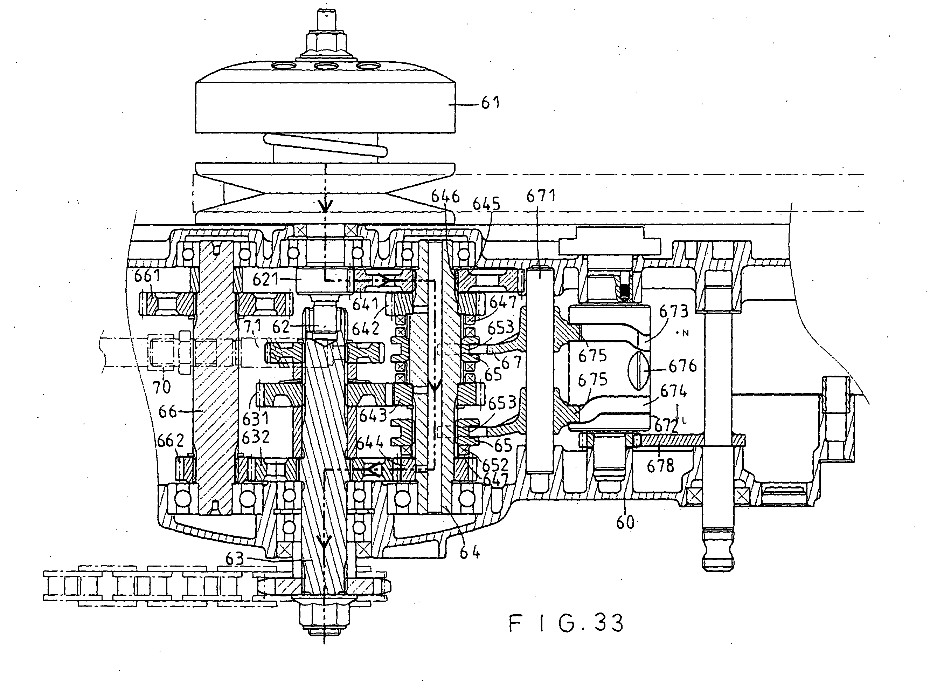

In application, as shown in Fig. 33, when the motorized beach vehicle is deeply trapped and cannot move, the gearbox structure can be shifted to the force increase gear "L". Then, the locking blocks 652 of the clutch 65 and the locking blocks 647 of the force increase change gear 644 are locked with each other to drive, so that the force increase change gear 644 that has smaller teeth may drive the force increase drive gear 632 that has larger teeth, thereby achieving a force increase effect with a low rotational speed and a large torsion, so that the motorized beach vehicle can detach from the trap conveniently.

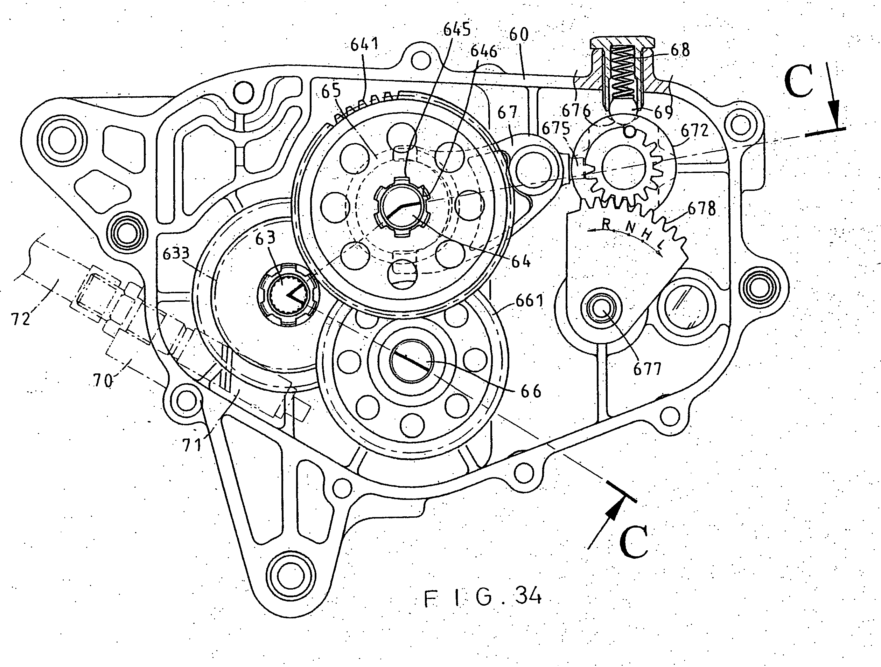

Referring to Fig. 34, for shifting and displacing the different gear positions accurately, the gearbox 60 is provided with a positioning spring 68 and a positioning ball 69. The gear shift cam shaft 672 is formed with multiple positioning recesses 676 to mate with the respective gear position. When the gear lever 677 is pivoted to rotate a sector-shaped gear 678 that meshes with a gear mounted on the gear shift cam shaft 672, the gear shift cam shaft 672 is rotated to the correct gear position.

Again referring to Fig. 34, the propeller shaft 63 in the gearbox 60 is additionally provided with a drive gear 633 which meshes with the helical gear 71 of a distance calculator 70, and the connecting line 72 of the distance calculator 70 is externally connected to an odometer (not shown). In such a manner, the distance calculator 70 is mounted in the gearbox 60.

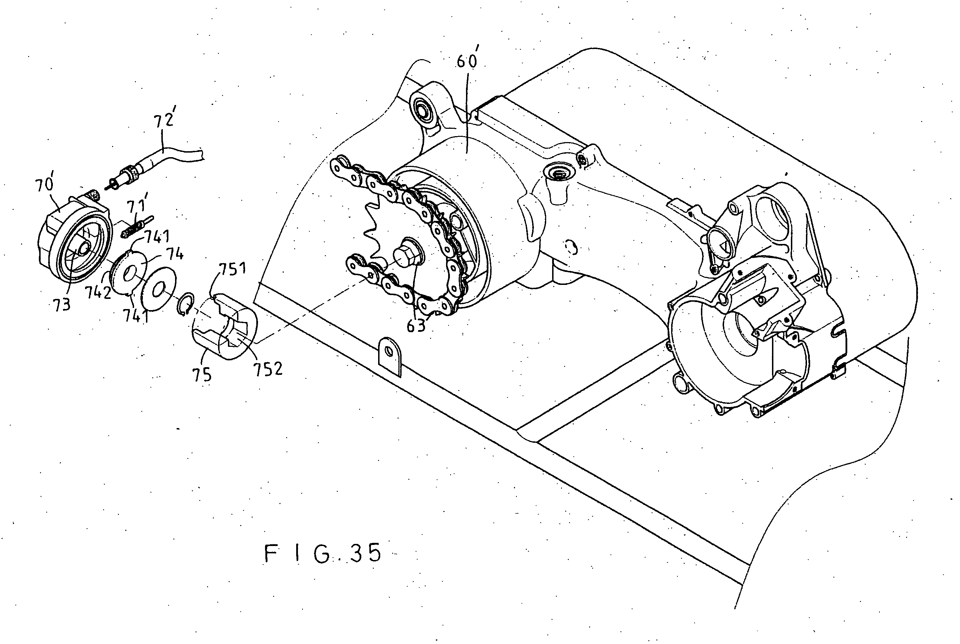

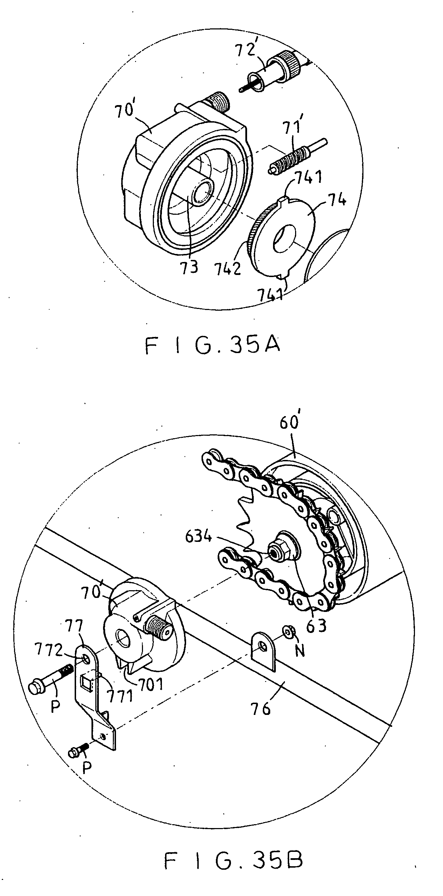

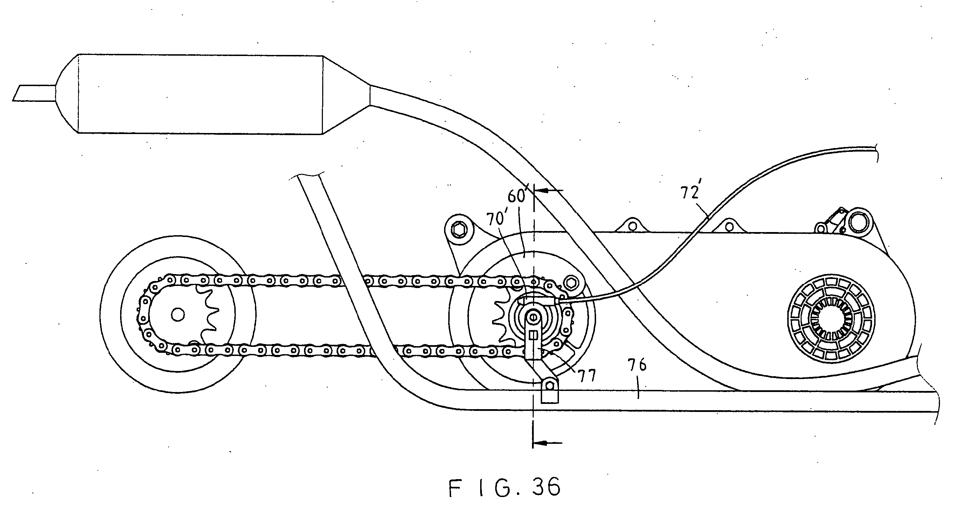

As shown in Figs. 35, 35A, 35B and 36, the gearbox 60' of the gear shift device is additionally provided with a distance calculator 70' which is provided with a rotation shaft 73 for mounting a bushing 74 and a sleeve 75. The bushing 74 is provided with multiple combination portions 741, and the sleeve 75 is provided with multiple mating combination portions 751 combined with the combination portions 741 of the bushing 74. The sleeve 75 is formed with a mounting hole 752 for mounting the propeller shaft 63' of the gearbox 60'. The bushing 74 is provided with a gear 742 meshing with the helical gear 71'. A fixing bracket 77 is secured on the vehicle body 76 by a bolt "P" and a nut "N". The fixing bracket 77 is provided with a locking plate 771 and is formed with a through hole 772. A bolt "P" is extended through the through hole 772 of the fixing bracket 77 and the distance calculator 70', and is screwed into a screw bore 634 formed in the propeller shaft 63' of the gearbox 60'. The distance calculator 70' has an outer periphery provided with a locking seat 701 for locking the locking plate 771 of the fixing bracket 77. Finally, the connecting line 72' of the distance calculator 70' is externally connected to an odometer (not shown).

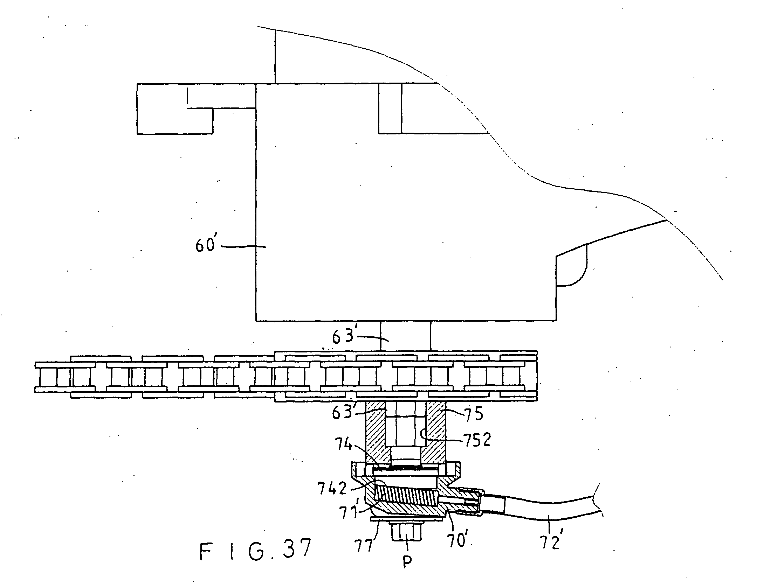

In application, as shown in Fig. 37, when the propeller shaft 63' of the gearbox 60' is rotated, the helical gear 71' of the distance calculator 70' may also be driven to rotate.

The motorized beach vehicle further comprises a steering device.

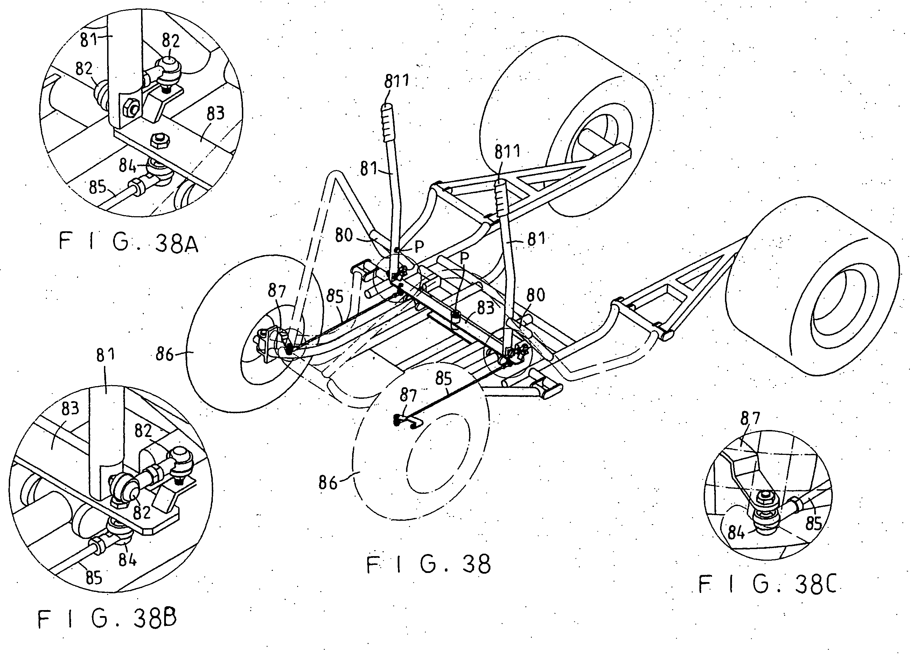

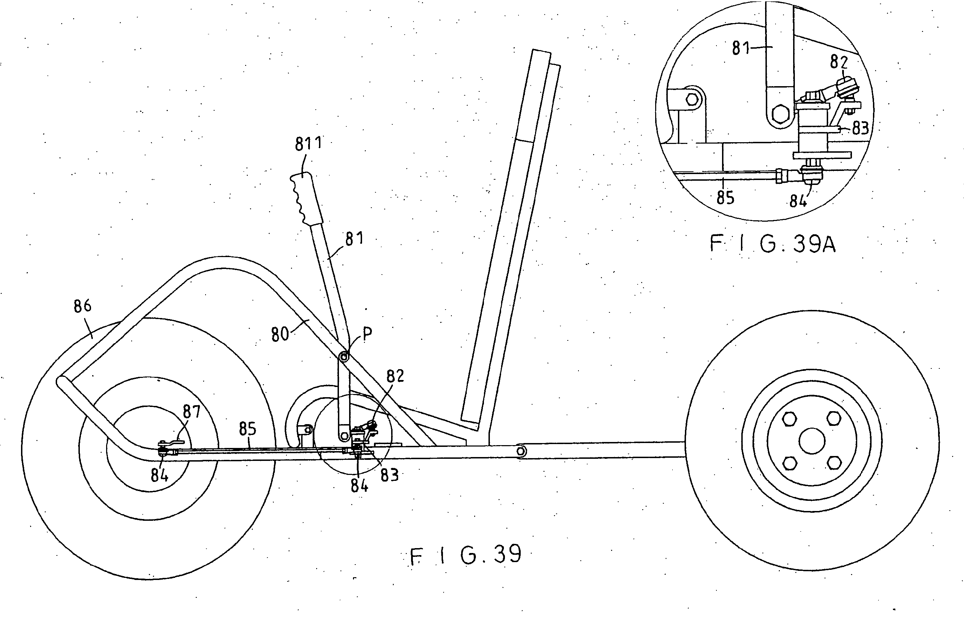

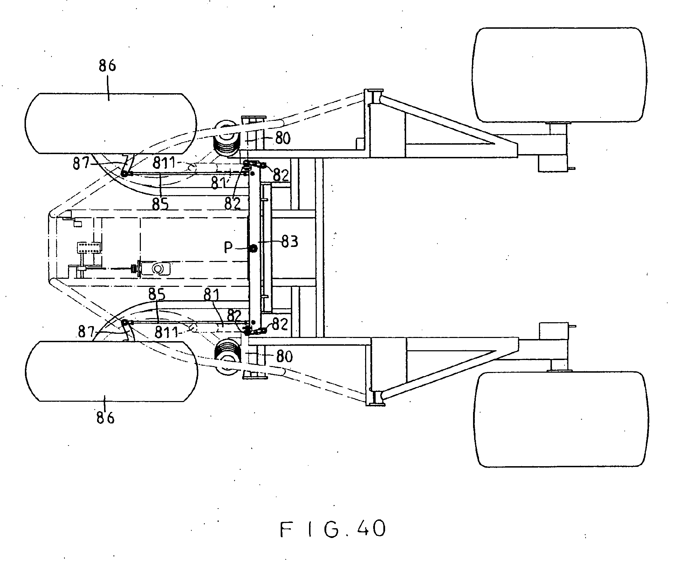

As shown in Figs. 38-40, the steering device includes two control bars 81 each mounted on each of the two frames 80 of the driver seat by a bolt "P". Each of the control bars 81 has a top provided with a handle 811, and has a bottom connected with a swing arm 83 by an universal connector 82. The mediate portion of the swing arm 83 is mounted on the bottom frame 80 of the driver seat by a bolt "P", so that the swing arm 83 may be pivoted evenly. Each of the two sides of the swing arm 83 is connected with a linking member 85 by an universal connector 84, so that the linking member 85 may be extended to the control plate 87 of the front wheel 86.

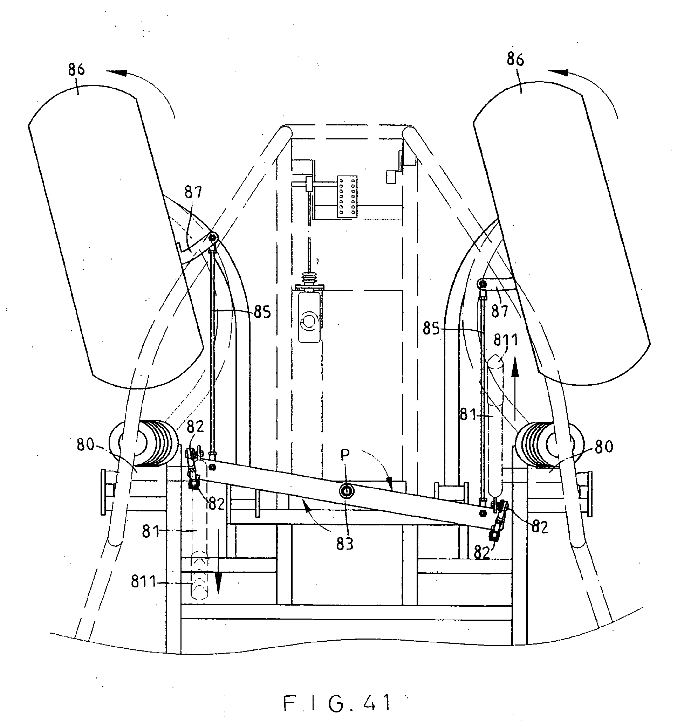

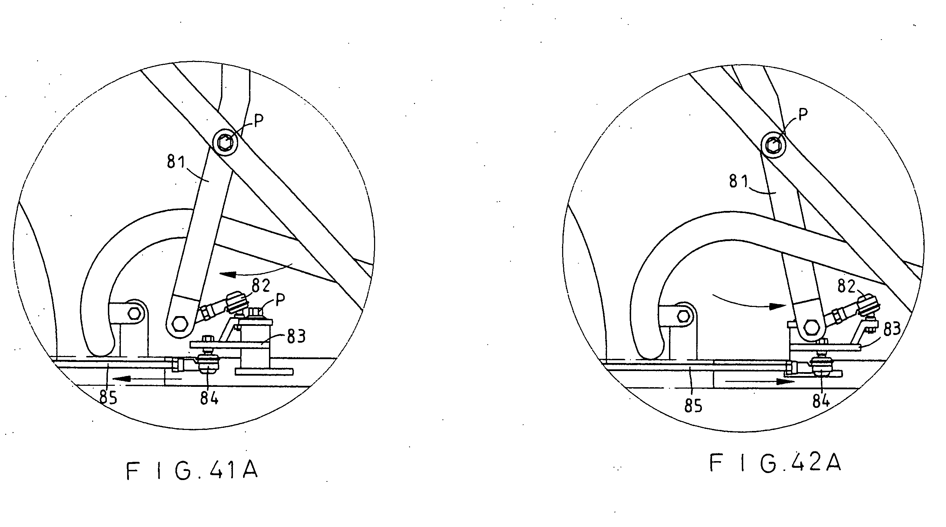

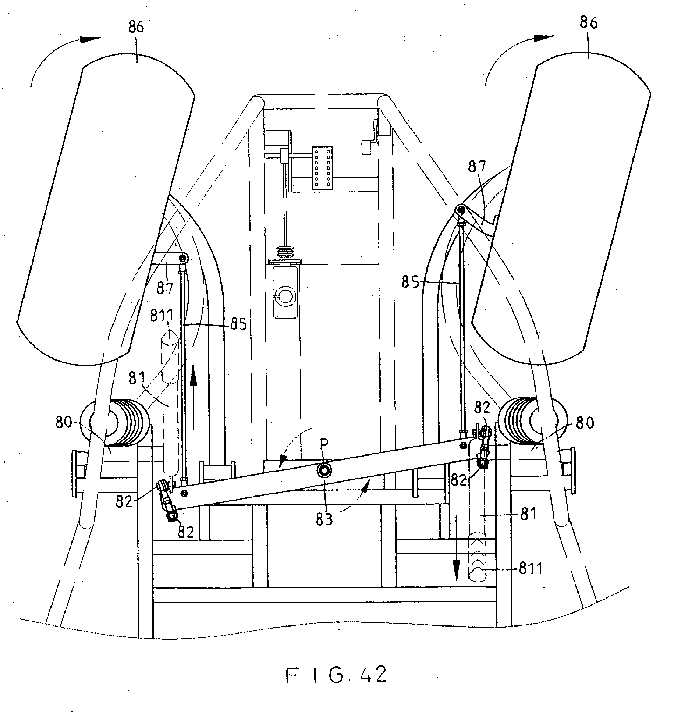

In application, as shown in Figs. 41, 41A, 42 and 42A, when the control bars 81 are pushed, the linking members 85 may be driven by pivot of the swing arm 83 , thereby producing push and pull actions, so that the control plate 87 may drive the front wheels 86 to turn with an equal steering angle.

The motorized beach vehicle further comprises a safety remote control and emergency safety switch power shutoff device.

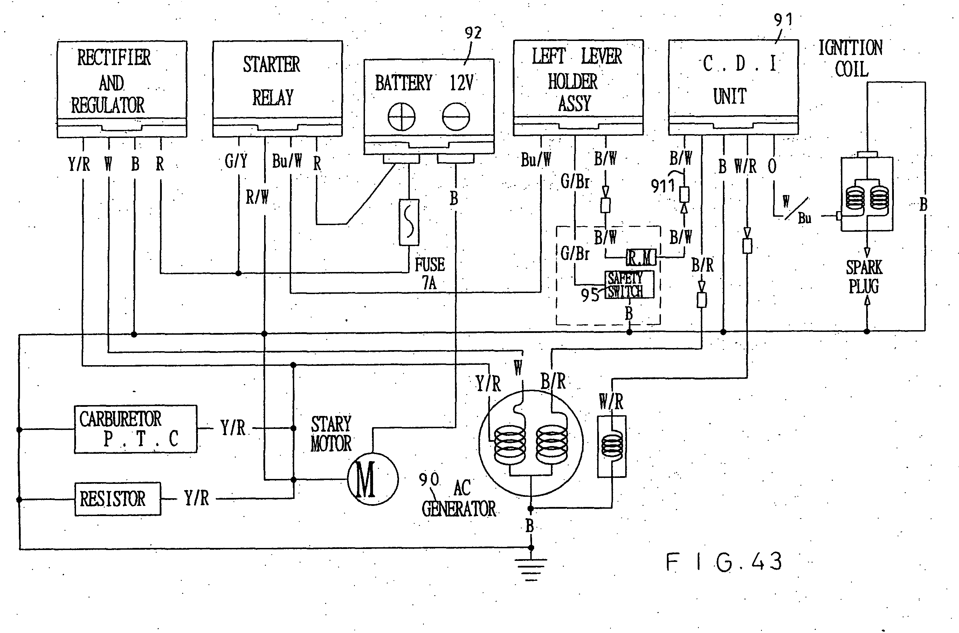

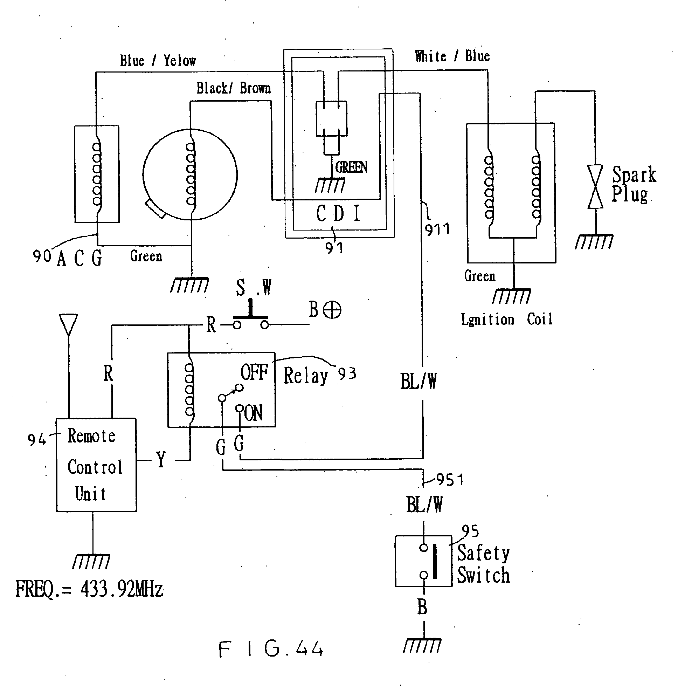

As shown in Figs. 43 and 44, the motorized beach vehicle includes an ACG (alternating current magneto generator) assembly 90, and a CDI (capacitor discharge ignition) unit 91 for controlling the engine to operate normally or stop operating. The electrical power of the CDI unit 91 is supplied by the battery 92. The CDI unit 91 has an engine operation stopping line 911 that is connected to a set of relay 93, a remote control unit 94, and a set of safety switch 95. The relay 93 may receive the switch signal of a wireless transmission device or a wire transmission device, so as to shut the power supply of the ACG assembly 90, thereby achieving the purpose of stopping operation of the engine during emergency.

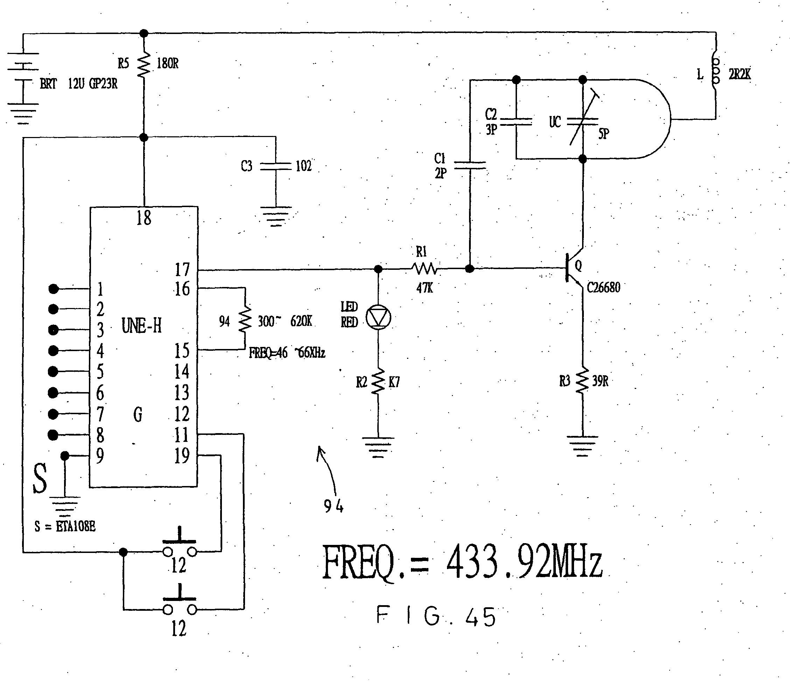

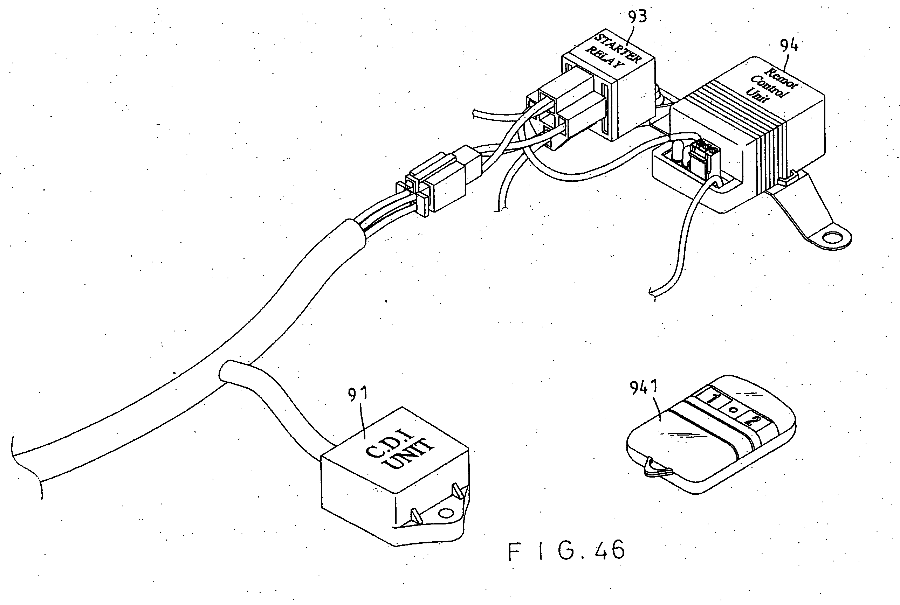

Referring to Figs. 45 and 46, the wireless transmission device uses the remote control unit 94 to receive the on/off signal transmitted from the remote controller 941, to start the relay 93, so as to shutoff or conduct the engine operation stopping line 911 of the CDI unit 91.

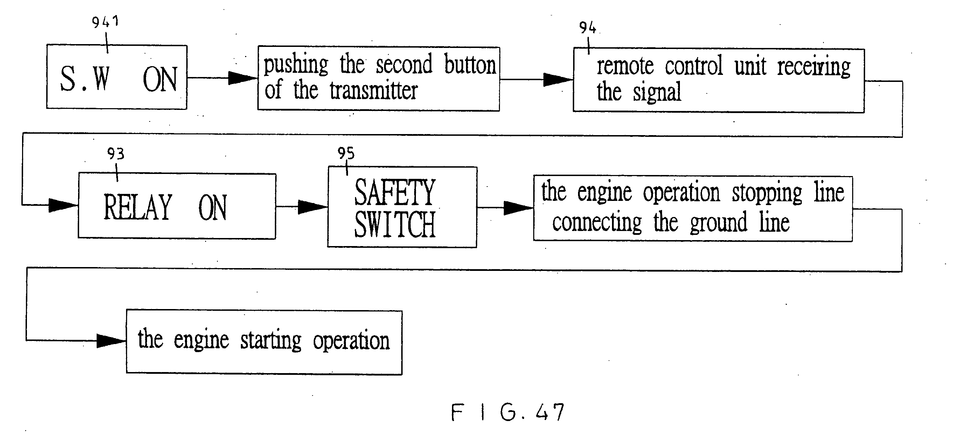

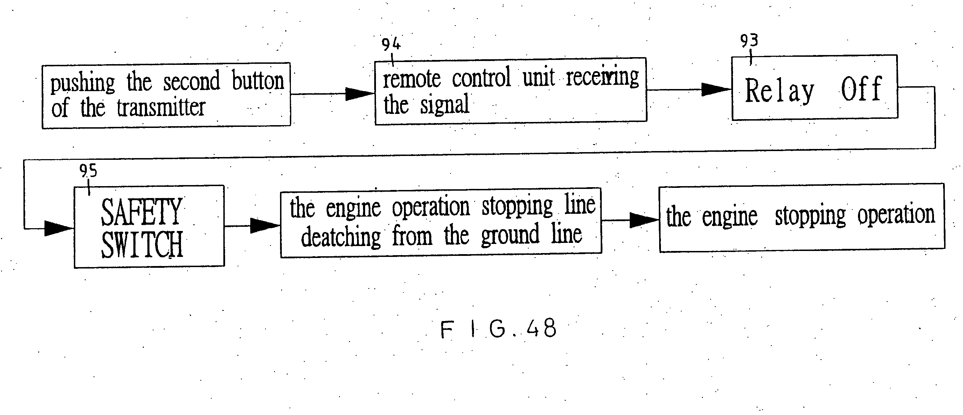

In practice, referring to Figs. 47 and 48, when the driver, such as the young man, is driving the motorized beach vehicle, the user, such as the parent or the coach, distant from the driver may push the switch buttons of the remote controller 94, so that the engine operation stopping line 911 of the CDI unit 91 of the motorized beach vehicle may detach from the ground line, so as to stop operation of the motorized beach vehicle, thereby achieving the purpose of safely shutting the electrical power of the motorized beach vehicle, so as to protect the driver's safety.

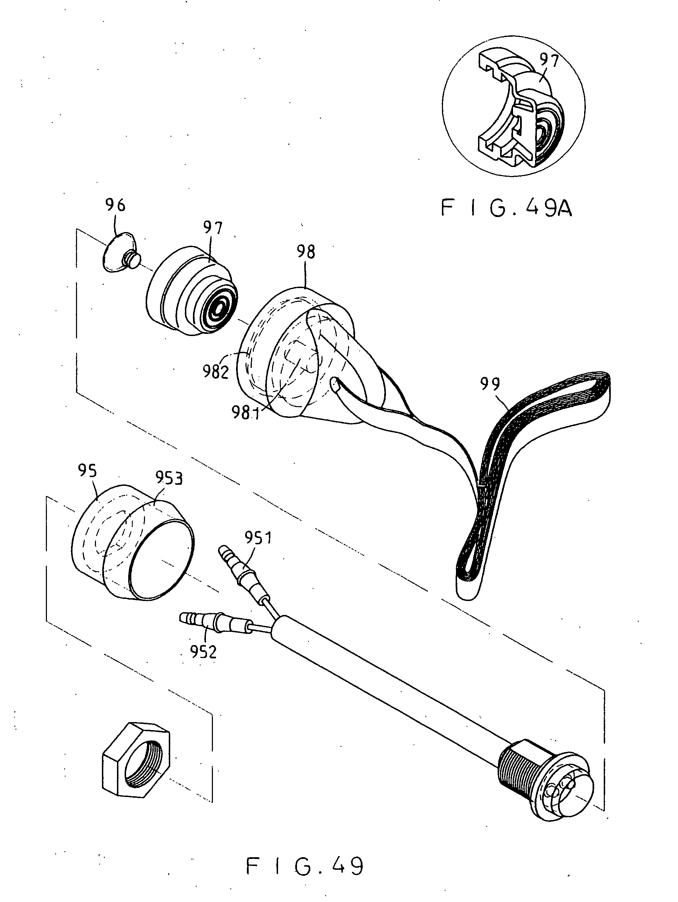

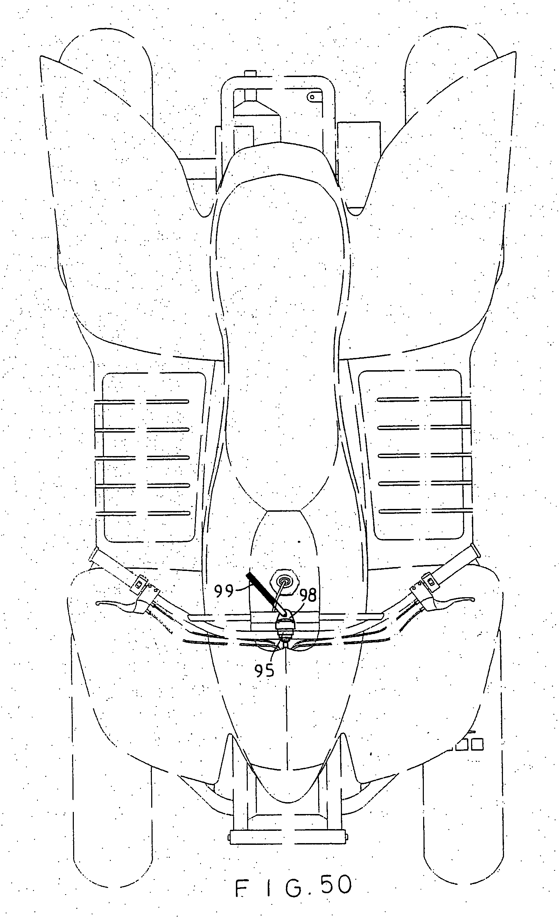

Referring to Figs. 49 and 50, in the wire transmission device, the safety switch 95 includes two lines 951 and 952 connected to the relay 93. Each of the two lines 951 and 952 is disposed at a normally open state. An electrically conductive seat 96 is mounted on the two lines 951 and 952, and an elastic sleeve 97 (best shown in Fig. 49A) is mounted on the electrically conductive seat 96. The safety switch 95 is mounted on the elastic sleeve 97. A rubber cap 98 is mounted on the safety switch 95, and has a center provided with an actuation rod 982, for pressing the elastic sleeve 97, so that the electrically conductive seat 96 may connect the two lines 951 and 952 to form a circuit. The rubber cap 98 has an inner wall formed with a snap groove 982, and the safety switch 95 has an outer wall provided with a snap hook 953 that may be snapped into the snap groove 982 of the rubber cap 98, so that the rubber cap 98 may be secured on the safety switch 95. The rubber cap 98 is connected to a first end of a strap (or rope) 99 which has a second end that may be tied on the driver's body, so that when the driver falls from the motorized beach vehicle, the rubber cap 98 may be detached from the safety switch 95 by the strap 99.

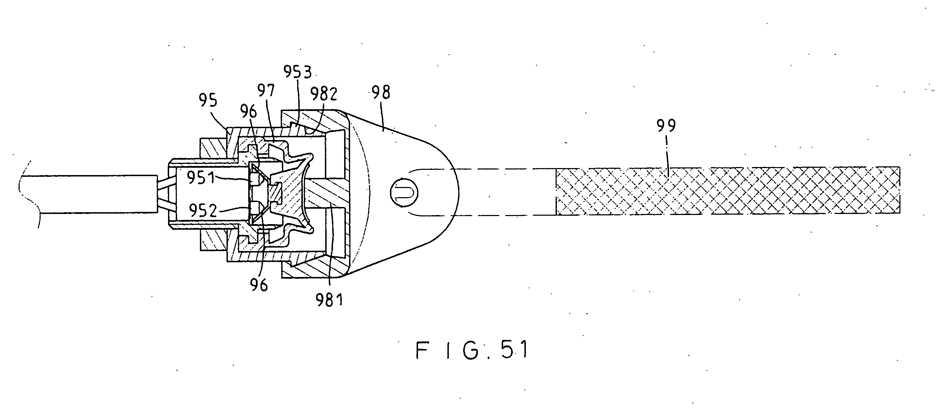

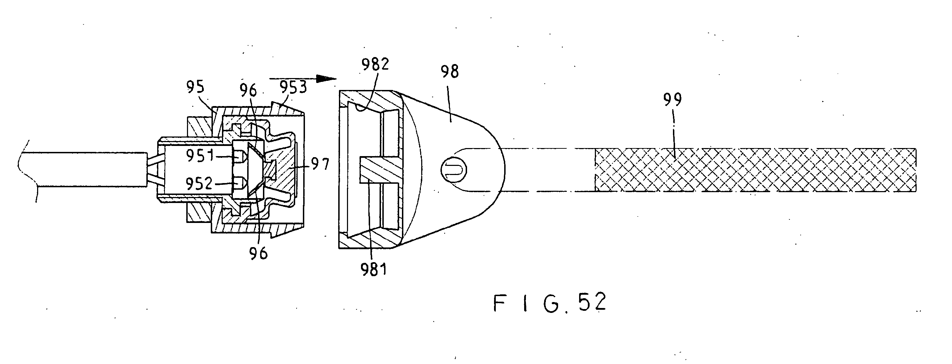

In application, referring to Figs. 51 and 52, when the driver falls from the motorized beach vehicle or when the drive cannot control and operate the motorized beach vehicle normally, the strap (or rope) 99 tied on the driver's body may pull the rubber cap 98 which may be moved from the position as shown in Fig. 51 to the position as shown in Fig. 52, so that the rubber cap 98 may be automatically detached from the safety switch 95 by pulling of the strap 99, thereby shorting the lines 951 and 952 of the safety switch 95, and thereby disconnecting the engine operation stopping line 911 of the CDI unit 91 of the driving motorized beach vehicle, so as to stop operation of the motorized beach vehicle, thereby achieving the purpose of safely shutting the electrical power, so as to protect the driver's safety.

Although the invention has been explained in relation to its preferred embodiment as mentioned above, it is to be understood that many other possible modifications and variations can be made without departing from the scope of the present invention. It is, therefore, contemplated that the appended claim or claims will cover such modifications and variations that fall within the true scope of the invention.

## Claims

1. A motorized beach vehicle, comprising a shock absorbing device (1,2,2',3,3',26,26',39,80), a transmission device (93,95), a gear shift device (6), a steering device (8), and a safety remote control and emergency safety switch power shutoff device (94,95), wherein:
the shock absorbing device (1,2,2',3,3',26,26',38,39,80) includes a fixing seat (14,22,34) containing an elastic body (16,16',36,36') for mounting a motor (10), a movable seat (23,231,23') containing an elastic body (36,36') for mounting a wheel axle (24) of a wheel (20,20'), and multiple bushings (35,35',74,222) each containing an elastic body (16,36'57) for mounting a main frame (31) and a secondary frame (32)..

2. The motorized beach vehicle in accordance with claim 1, wherein the transmission device includes a differential (4,4') mounted between a drive member (40) and a driven member (46), the differential (4) includes at least one single direction thrust bearing (422) and at least one clutch (47,65), and the transmission device (93,95) further includes an automatic tension adjusting device including at least one elastic member (16) and at least one idler (51) for adjusting the tension of a power transmission member.

3. The motorized beach vehicle in accordance with claim 1, wherein a gear shift device includes a gearbox (6) having a propeller shaft (63,63') provided with a gear having smaller teeth, and a gear shift shaft provided with a gear having larger teeth, thereby forming a force increase gear with a low rotational speed and a large torsion, and the propeller shaft (63,63') is provided with a drive gear (40) which is mounted in the gearbox (40), and is connected to a distance calculator.

4. The motorized beach vehicle in accordance with claim 1, wherein the steering device (8) includes two control bars (81) each mounted on each of the two frames (31,32) of a driver seat, the two control bars (81) may drive a swing arm (55,83) which may drive at least one linking member which may drive at least one control plate (87) to control a wheel (86) to turn around, and the swing is pivotally mounted on a vehicle body, so that the wheels (20,20') at two sides of the vehicle body may be turned around simultaneously, and may have an equal steering angle.

5. The motorized beach vehicle in accordance with claim 1, wherein the safety remote control and emergency safety switch power shutoff device (94,95) includes a capacitor discharge ignition unit provided with a relay (93), and the relay (93) may receive a switch signal of a wireless transmission device (93,94) (a remote controller) or a wire transmission device (93) (a safety switch), so as to shut the power supply of an alternating current magneto generator assembly (90), thereby stopping operation of the engine during emergency.

6. The motorized beach vehicle in accordance with claim 1, wherein the driven member (40) of the transmission device (93,95) included a wheel axle (38,62), a gear 632), and a propeller shaft (63,63').

7. The motorized beach vehicle in accordance with claim 1, wherein the power transmission member of the transmission device (93,95) includes a chain (50,50') and a belt.
